(19) Europäisches Patentamt
European Patent Office
Office européen des brevets

(11) **EP 1 597 554 B1**

(12) **EUROPÄISCHE PATENTSCHRIFT**

(45) Veröffentlichungstag und Bekanntmachung des Hinweises auf die Patenterteilung:
**30.01.2008 Patentblatt 2008/05**

(21) Anmeldenummer: **04708336.5**

(22) Anmeldetag: **05.02.2004**

(51) Int Cl.:
**G01L 1/14** (2006.01)          **G01M 3/18** (2006.01)
**F16L 23/16** (2006.01)

(86) Internationale Anmeldenummer:
**PCT/EP2004/001080**

(87) Internationale Veröffentlichungsnummer:
**WO 2004/070333 (19.08.2004 Gazette 2004/34)**

(54) **VERFAHREN ZUR FESTSTELLUNG WENIGSTENS EINES ZUSTANDSPARAMETERS EINES DICHTUNGSSYSTEMS SOWIE DICHTUNGSSYSTEM**

METHOD FOR DETERMINING AT LEAST ONE STATE PARAMETER OF A SEALING SYSTEM AND SEALING SYSTEM

PROCEDE POUR DETERMINER AU MOINS UN PARAMETRE D'ETAT D'UN SYSTEME D'ETANCHEITE ET SYSTEME D'ETANCHEITE

(84) Benannte Vertragsstaaten:
**AT BE BG CH CY CZ DE DK EE ES FI FR GB GR HU IE IT LI LU MC NL PT RO SE SI SK TR**

(30) Priorität: **07.02.2003 DE 10305110**
**19.09.2003 DE 10343498**

(43) Veröffentlichungstag der Anmeldung:
**23.11.2005 Patentblatt 2005/47**

(73) Patentinhaber: **Universität Leipzig**
**04109 Leipzig (DE)**

(72) Erfinder: **KREMER, Friedrich**
**04416 Markkleeberg (DE)**

(74) Vertreter: **Prechtel, Jörg**
**Weickmann & Weickmann**
**Patentanwälte**
**Postfach 86 08 20**
**81635 München (DE)**

(56) Entgegenhaltungen:
**EP-A- 0 633 460**          **EP-A- 1 460 406**
**DE-A1- 3 006 656**          **DE-A1- 4 139 622**
**DE-A1- 10 027 576**          **US-A- 5 177 996**
**US-A- 5 793 150**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Feststellung wenigstens eines Zustandsparameters eines Dichtungssystems mit wenigstens einem dielektrischen Element, welches poröses dielektrisches Material enthält, sowie ein entsprechendes Dichtungssystem.

Dichtungssysteme werden in den verschiedenartigsten Anwendungen zur Abdichtung zweier Räume gegeneinander (beispielsweise Abdichtung eines Behälters oder einer Rohrleitung nach außen hin) eingesetzt, wobei das Dichtungssystem einen Übertritt von Fluid (gasförmig oder flüssig) von dem einen Raum in den anderen verhindern soll.

An die Zuverlässigkeit derartiger Dichtungssysteme werden oft extrem hohe Anforderungen gestellt, so im chemischen Anlagenbau oder in Kernkraftwerken. Dabei ist die zuverlässige Abdichtung nicht nur unmittelbar nach dem Einbau sondern auch über möglichst lange Betriebszeiträume von großer Bedeutung. Die Dichtungselemente können hohen Drücken ausgesetzt sein, die noch dazu schwanken können, wobei Temperaturbelastungen hinzu kommen können. Auch kann es unter der Einwirkung des abzudichtenden Fluids zu Veränderungen von Struktur und chemischer Zusammensetzung des Dichtungsmaterials kommen. Diese Einflüsse führen generell zu einer Beeinträchtigung der Abdichtfunktion des Dichtungsmaterials, was man auch als erzwungene Alterung bezeichnen kann, die zur natürlichen Alterung des Dichtungsmaterials hinzu kommt. Da man bislang die Alterung des Dichtungsmaterials praktisch nicht erfassen konnte, müssen die Dichtungselemente zumindest bei Anlagen mit hohen Anforderungen an die Dichtungszuverlässigkeit in relativ kurzen Abständen ausgewechselt werden. Da die Anlage während des Dichtungsaustausches still steht, ergeben sich zum Teil beträchtliche Ausfallkosten.

Verfahren zur Überwachung von Dichtungssystemen sind bekannt. So beschreibt die DE 30 06 656 A1 eine Flachdichtung, die zwischen zwei Flanschen angeordnet ist und gleichzeitig eine Druckgeber-Funktion hat. Zwischen zwei Elektrodenschichten ist ein Dielektrikum angeordnet. Die Elektroden sind an eine Messeinrichtung angeschlossen. Werden die Flansche zur Herstellung der Dichtfunktion aufeinander zu bewegt, so führt die resultierende Volumendeformation des Dielektriums zu elektrostatischen Oberflächenladungen, die von den Elektroden abgeleitet werden und, nach Verstärkung durch einen Verstärker, ein dem Dichtungsdruck entsprechendes Signal liefern.

Aus der DE 41 01 871 A1 ist ein Dichtungssystem bekannt, bei welchem in das Dichtungselement eine Sensorfolie eingebaut ist, die aus einer flexiblen piezoelektrischen Schicht zwischen zwei Schutzfolien besteht. An Hand der piezoelektrischen Spannung lässt sich der mechanische Spannungszustand innerhalb des Dichtungselements feststellen, und zwar auch über längere Betriebszeiten. Aus einer Abnahme des so gemessenen Dichtungsdrucks wird auf den Grad der Alterung des Dichtungsmaterials geschlossen, was jedoch voraussetzt, dass die auf die Flansche wirkende Spannkraft unverändert geblieben ist. In dieser Druckschrift wird es ausdrücklich abgelehnt, den Dichtungsdruck dadurch zu erfassen, dass man die Kapazitätsänderungen von unter Druck gesetzten Kondensatoren mit elastisch verformbaren Dielektrika nutzt, und zwar deshalb, weil die Forderung nach elastischer Verformung der nach viskoelastischem Fließverhalten beim Dichtungsprinzip entgegen steht. Der auf die plastische Verformung und damit den Dichtungsdruck zurückzuführende Anteil an der Kapazitätsänderung wird also in generell nicht vorbekanntem Maße überlagert von der auf das viskoelastische Fließen zurückzuführenden Kapazitätsänderung. Die Messgenauigkeit würde insbesondere bei kleineren Dichtungen in starkem Maße eingeschränkt.

Zur Überwachung der Dichtheit von Rohrleitungen ist es bekannt (DE 34 41 924 A1) diese mit einem Leckanzeige-Kabel zu umwickeln. Dieses weist ein poröses PTFE-Band als Detektorschicht zwischen zwei Elektrodenschichten auf, wobei aus einer Kapazitätsänderung dieser Anordnung auf ein Eindringen von Leck-Flüssigkeit geschlossen wird.

Aus der DE 41 39 602 A1 ist ein Verfahren zur Bestimmung von elektromagnetischem Impedanzen im Frequenzbereich zwischen 0 Hz und 10 GHz bekannt, mit welchem sich dielektrische und magnetische Materialparameter bestimmen lassen.

Aus der EP 0 841 516 A1 ist ein Verfahren zur Feststellung von Undichtigkeiten eines Dichtungssystems mit wenigstens einem Dichtungselement und wenigstens einem dielektrischen Element bekannt, bei welchem eine Änderung der resonanten Schwingungen eines Parallelschwingkreises in Folge einer Änderung der Dielektrizitätskonstante im Bereich des Dichtungssystems nachgewiesen wird.

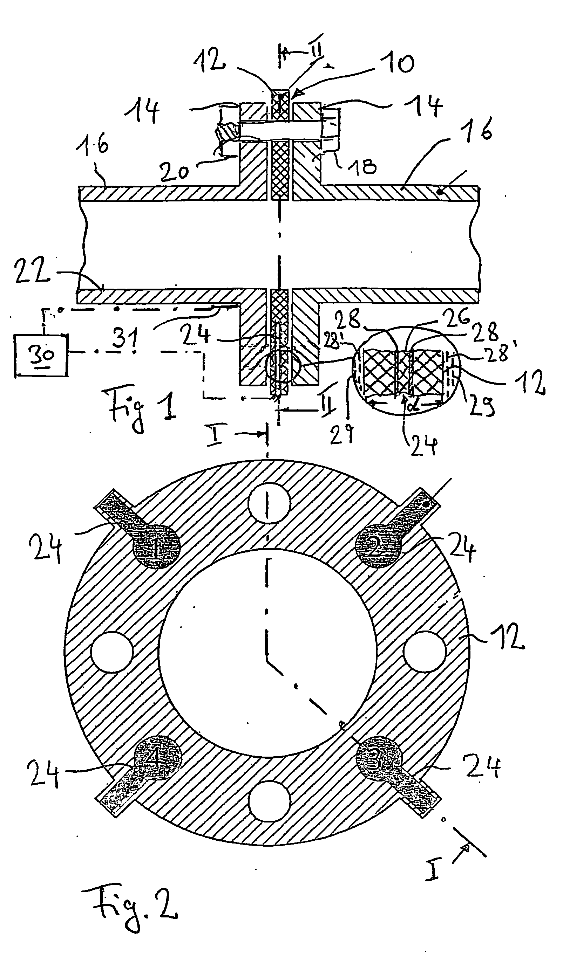

In der US 5,072,190 A ist im Zusammenhang mit einem Drucksensorgehäuse dargestellt, wie unter anderem die Dichtheit des Drucksensorgehäuses durch Überwachung der elektrischen Eigenschaften einer in das Gehäuse eingefüllten Druckübertragungsflüssigkeit überprüft wird (siehe Figur 2 mit dazugehöriger Beschreibung). Als Beispiele für die zu überwachenden elektrischen Eigenschaften der Druckübertragungsflüssigkeit ist hier der elektrische Widerstand oder die Leitfähigkeit genannt.

Aus der US 5,793,150 ist es bekannt, bei einer Flansch-Dichtungsanordnung die Flachdichtung beidseitig mit einer Deckschicht aus polymerem Material zu versehen. Die Metallflansche bilden die Platten eines Kondensators. Eine in das Dichtmaterial eingesetzte Ringelektrode dient als Mittelelektrode. Wenn bei Undichtigkeit die abzudichtende Flüssigkeit in eine der beiden Deckschichten eindringt, ändert sich deren Dielektrizitätskontante und damit die Kapazität des Plattenkondensators. Aus der gemessenen Kapazitätsänderung wird auf ein Leck geschlossen.

Aus der am 22. September 2004 veröffentlichten EP 1 460 406 A1 mit Priorität 27. Dezember 2001 ist ein Verfahren zur Leck-Detektion von Schweißnähten von Milchtüten oder dergleichen bekannt, wobei das Tütenmaterial von innen nach außen aus einer Harzinnenschicht, einer Aluminiumschicht, einer Papierschicht und einer Harzaußenschicht besteht. Beim Verschweißen werden zwei Milchtütenwände mit ihren Innenseiten aneinander gelegt und unter Druckanwendung erhitzt zum Verschmelzen der Harzinnenschicht. Zur Leckagemessung werden Elektroden an die Außenseiten der miteinander verschweißten Milchtütenwände gebracht und es wird die Kapazität der aus diesen Elektroden und den dazwischen liegenden Milchtütenwänden gebildeten Anordnung gemessen. Eine leckende Schweißnaht hat eine messbare Kapazitätsänderung zur Folge.

Die US 5,177,996 zeigt ein Detektionskabel zur Messung von Lecks beispielsweise von unterirdischen Öltanks, wobei dieses Kabel unterhalb des Öltanks im Erdreich zu verlegen ist. In einer Koaxialanordnung findet sich eine mikroporöse Isolierung zwischen den beiden Koaxialleitern. In das Kabel eindringendes Leck-Öl ändert die Dielektrizitätskonstante der Isolierung, was wiederum durch Impedanzmessung detektierbar ist.

Auch die EP 0 633 460 A2 offenbart ein Koaxialkabel mit zwischen den Leitern befindlichem Dielektrikum, welches bei Kontakt mit der zu detektierenden Leckflüssigkeit seine Dielektrizitätskonstante verändert, was durch Auswertung von Impuls-Hochfrequenzsignalen auf der Basis der Impulsreflexionsmesstechnik, kann der Ort und die Stärke der Veränderung der Dielektritzitätskonstante im Sensorkabel bestimmt werden. Das Sensorkabel ist zum Einbau in doppelwandige Böden vorgesehen.

Der Erfindung liegt die Aufgabe zugrunde, ein Verfahren zur Feststellung wenigstens eines Zustandsparameters eines Dichtungssystem sowie ein Dichtungssystem mit wenigstens einem dielektrischen Element bereitzustellen, welches zuverlässige Aussagen über einen Zustand des Dichtungssystems erlaubt. Diese Aufgabe wird durch die Merkmale des Anspruchs 1 bzw. durch die Merkmale des Anspruchs 30 gelöst.

Es wurde erkannt, dass die messtechnische Erfassung der dielektrischen Funktion eine Fülle von Informationen über den inneren Zustand des Dichtungssystems bereitstellen kann. So kann die dielektrische Funktion über einen extrem weiten Frequenzbereich von $10^{-6}$ bis $10^{7}$ Hz messtechnisch erfasst werden, wobei der Realteil und der Imaginärteil der dielektrischen Funktion unterschiedliche Aussagen über den Zustand des Dielektrikums erlauben. Eine Übersicht über einsetzbare Messverfahren findet sich im Lehrbuch "Broadband dielectric spectrosopy" F. Kremer, A. Schönhals, (Eds.) Springer Verlag, Berlin 2002 in Kapitel 2 "Broadband dielectric measurement techniques".

In Abhängigkeit vom verwendeten dielektrischen Material lassen sich Aussagen über den inneren mechanischen Spannungszustand des dielektrischen Materials machen, so dass man beispielsweise eine schiefe Einbaulage des Dichtungssystems über mehrere umfangsverteilte dielektrische Elemente feststellen kann. Auch über den inneren strukturellen und molekularen Aufbau des dielektrischen Elements, der auch vom Alterungszustand des dielektrischen Materials abhängt, lassen sich Aussagen treffen. Sofern als dielektrisches Material für das dielektrische Element das gleiche verwendet wird, wie für das Dichtungselement selbst, kann somit der Alterungszustand des Dichtungselements erfasst werden.

Es besteht die Möglichkeit, die Dichtheit des Dichtungssystems unmittelbar zu überwachen, und zwar dadurch, dass man ein solches dielektrisches Material für das dielektrische Element einsetzt, welches bei Kontakt mit dem abzudichtenden Fluid seine dielektrischen Eigenschaften ändert. Dazu wird ein dementsprechend poröses dielektrisches Material eingesetzt mit hoher Kapillarität für das verwendete Fluid.

Je nach verwendetem dielektrischen Material legt man den Frequenzbereich für die Messung der dielektrischen Funktion fest, d.h. so, dass für den interessierenden Zustandsparameter größte Empfindlichkeit des Realteils und/oder des Imaginärteils der dielektrischen Funktion gegeben ist. Generell liegt die Frequenz in einem Frequenzbereich von 0,1 Hz bis 10 MHz, vorzugsweise zwischen 100 Hz und 100 kHz. Bei niedrigeren Frequenzen ergeben sich Probleme durch das Auftreten von ionischem Ladungsträgertransport. Höhere Frequenzen sind zwar prinzipiell messbar, jedoch mit einer anderen Art der Energieeinkopplung.

Bevorzugt ermittelt man einen charakteristischen Frequenzverlauf des Realteils und/oder des Imaginärtelis der dielektrischen Funktion. In vielen Fällen wird man durch Vorabmessungen mit dem vorgesehenen dielektrischen Material feststellen, welcher Frequenzbereich für den Frequenzverlauf des Realteils bzw. für den Frequenzverlauf des Imaginärteils am empfindlichsten auf Änderungen des interessierenden Zustandsparameters reagiert. Generell ist die komplexe dielektrische Funktion durch Ladungstransporte und durch molekulare Relaxationsprozesse bestimmt. Der Ladungstransport über Ionen zeigt sich in einem Anstieg des Realteils (auch $\varepsilon$' genannt) und des Imaginärteils (auch $\varepsilon$" genannt) bei abnehmender Frequenz. Molekulare Relaxationsprozesse dagegen zeigen sich in einem Peak in $\varepsilon$" und in einer Stufe in $\varepsilon$' (siehe auch beispielsweise Kohlrausch "Praktische Physik" b.g. Täubner Verlag Stuttgart, 1985, Band II, Seite 866, Figur 10.115 am Beispiel von vulkanisiertem Hartgummi).

Man wird daher zweckmäßigerweise je nach verwendetem dielektrischen Material Formparameter des Frequenzverlaufs wie Absolutwert, Steigung oder Krümmung des Frequenzverlaufs bei einer vorgegebenen Frequenz wählen. Man kann aber auch die Frequenzlage oder die Amplitude eines charakteristischen Abschnitts des Frequenzverlaufs, wie z.B. einer Stufe oder eines Peaks, als Formparameter verwenden.

Die Zuverlässigkeit der Feststellung eines Zustandsparameters wie beispielsweise der Alterung des Dichtungsmaterials des dielektrischen Systems, lässt sich durch Beobachtung mehrerer Formparameter deutlich erhöhen. Bei dielektrischem Material aus in Nitrilkautschuk eingebetteten Fasern aus aromatischem Polyamid (z.B. Aramidfasern) hat sich folgende Kombination bewährt: Erster Formparameter: Steigung des Realteils bei niedrigen Frequenzen, vorzugsweise < 100 Hz;

zweiter und dritter Formparameter: Absolutwerte des Realteils und des Imaginärteils bei hohen Frequenzen, vorzugsweise > 1 kHz. Bei einem dielektrischen Material, welches PTFE (Polytethraflurethylen) enthält, beispielsweise ein Material aus Aramidfasern imprägniert mit einer PTFE-Dispersion, hat sich als Formparameter der Absolutwert des Imaginärteils bei einer Frequenz zwischen 100 Hz und etwa 1 kHz, vorzugsweise von etwa 100 Hz bewährt.

Für den Fall, dass der Frequenzverlauf von $\varepsilon''$ einen Peak aufweist, wie es bei dem angesprochenen Beispiel von vulkanisiertem Hartgummi der Fall ist, kann auch die unterhalb des Peaks gebildete Fläche (auch dielektrischer Verlust genannt) als Formparameter eingesetzt werden. Ein weiteres Beispiel für einen möglichen Formparameter ist der Quotient aus den Absolutwerten des Imaginärteils und des Realteils (auch Verlustfaktor $\tan\delta$ mit $\delta$ = Verlustwinkel genannt).

Welcher Formparameter bzw. welche Kombination von Formparametem zweckmäßigerweise gewählt wird, ergibt sich aus Vorabmessungen an dem jeweiligen Material.

Bevorzugt werden an mehreren Stellen des Dichtungselements dielektrische Elemente vorgesehen, an denen man jeweils den Realteil und/oder den Imaginärteil der dielektrischen Funktion misst. Dies erhöht die Zuverlässigkeit des Verfahrens, da jeweils mehrere Messergebnisse zur Verfügung stehen. Falls ein dielektrisches Element ausfällt, kann der Zustand des Dichtungssystems auch anhand der übrigen dielektrischen Elemente festgestellt werden.

Darüber hinaus erhält man bei einer derartigen Anordnung mit mehreren über den Umfang des Dichtungselements verteilten dielektrischen Elementen die Möglichkeit, die korrekte Einbaulage des Dichtungssystems festzustellen. Bei schiefer Einbaulage werden die dielektrischen Elemente dementsprechend unterschiedlich zusammengedrückt, was sich auf die jeweilige komplexe dielektrische Funktion dementsprechend auswirkt. Wenn man also die an mehreren Stellen erhaltenen Messergebnisse miteinander vergleicht und die Abweichungen der Messergebnisse zueinander ein vorgegebenes Maß überschreiten, kann man auf eine schiefe Einbaulage des Dichtungssystems schließen. Dieses vorgegebene Maß wird man wiederum durch entsprechende Vergleichsmessungen vorab ermitteln. Zum Vergleich der Messergebnisse wird bevorzugt jeweils ein materialspezifischer für mechanische Spannungsänderungen sensitiver Formparameter ermittelt. Im bereits angesprochenen Beispiel mit dielektrischem Material aus Aramidfaser innerhalb einer PTFE Dispersion hatte sich als Formparameter der Absolutwert von $\varepsilon''$ bei etwa 100 Hz bewährt.

Um zu überprüfen, ob das aktuell eingebaute Dichtungselement funktionstüchtig ist, wird vorgeschlagen, dass man das aktuelle Messergebnis an diesem Dichtungselement mit einer Vergleichsmessung an einem funktionstüchtigen Dichtungselement vergleicht und bei einer ein vorgegebenes Maß überschreitenden Abweichung oder bei Überschreitung bzw. Unterschreitung eines vorgegebenen Grenzwertes auf ein nicht funktionstüchtiges aktuelles Dichtungselement schließt. Bei dem Zustandsparameter kann es sich hier um wenigstens einen der bereits genannten Zustandsparameter Dichtungsdruck, Alterung oder Dichtheit handeln. Als Vergleichsmessung kommt eine vorab am gleichen dielektrischen Material vorgenommene Messung in Frage, so dass überprüft werden kann, ob die für den Einbau bestimmte Dichtung neu oder bereits gealtert ist. In der Regel wird man jedoch als Vergleichsmessung die erste Messung nach erfolgter Montage nehmen und diese mit den bei der laufenden Überwachung des Dichtungssystem anfallenden Messungen vergleichen.

Die Entscheidung, ob das aktuelle Dichtungselement noch funktionstüchtig ist oder nicht, erfolgt anhand des vorgegebenen Maßes für die noch zulässige Abweichung bzw. anhand des vorgegebenen Grenzwertes. Beide Werte können vorab anhand entsprechender Messungen nach Belastungstestmessung an dem verwendeten Dichtungssystems ermittelt werden. Im Falle des den Alterungszustand angebenden Zustandsparameters wird man zwischenzeitliche Probenerwärmungsschritte einschieben, um damit eine Alterung im "Zeitraffer" zu erhalten. Soll der Zustandsparameter die Dichtheit des Dichtungssystems angeben, so wird bevorzugt eine Belastungstestserie mit steigendem Fluiddruck vorgenommen, bis Undichtigkeit auftritt.

Im Allgemeinen wird das Element von einer Kondensatoranordnung gebildet aus zwei Elektrodenschichten und einer Mittelschicht aus dem dielektrischen Material. Das dielektrische Element selbst kann vergleichsweise klein sein mit einer Dicke von vorzugsweise 10 $\mu$m und einer Fläche von 5 mm$^2$. Bevorzugt werden die Dimensionen derart festgelegt, dass man eine Kapazität von 1 - 1000 pF, am besten von etwa 100 pF erhält, da dies messtechnisch von Vorteil ist.

Im Industrieanlagenbau spielt das Abdichten von gasförmigen Fluiden (gasförmiges Dichtungsfluid wie z.B. Radon, Toluol, Methan, Wasserdampf) eine große Rolle. Dabei können die Betriebstemperaturen bei bis zu 500˚ C liegen. Die dielektrische Funktion hat aber eine ausgeprägte Temperaturabhängigkeit. Dies hat seinen Grund darin, dass die zugrunde liegenden molekularen Ladungstransportprozesse sowie Relaxationsprozesse selbst in für das jeweilige System charakteristischer Weise von der Temperatur abhängen. Um den Zustand des Dichtungssystems beurteilen zu können, ist es daher notwendig, auch dessen jeweilige Temperatur zu berücksichtigen.

Die Weiterbildung der Erfindung wird daher für Dichtungssysteme mit variierenden Betriebstemperaturen vorgeschlagen, dass man die jeweilige Temperatur des wenigstens einen Dichtungselements misst und bei der Bewertung der gemessenen komplexen dielektrischen Funktion berücksichtigt.

Dies kann dadurch geschehen, dass man im möglichen Betriebstemperaturbereich des Dichtungssystems bei wenigstens zwei unterschiedlichen Temperaturen entsprechende Vergleichsmessungen vornimmt, und dass man das aktuelle Messergebnis bei der aktuellen Temperatur mit der Vergleichsmessung bei der nächstkommenden Temperatur vergleicht.

Man kann allerdings auch aus dem aktuellen Messergebnis und der aktuellen Temperatur ein temperaturkorrigiertes Messergebnis ableiten bzw. aus dem ermittelten Formparameter und der aktuellen Temperatur einen temperaturkorrigierten Formparameter ableiten.

Wie oben ausgeführt, ändern sich die dielektrischen Eigenschaften des dielektrischen Elements bei Normalbetrieb des Dichtungssystems (von Alterungseffekten abgesehen) praktisch nicht. Durch Adsorption von Gasen und erst recht von Flüssigkeiten in Folgen von Undichtigkeiten des Dichtungssystem ergeben sich jedoch drastische Änderungen der dielektrischen Funktion. Bei geeigneter Auswahl des nanoporösen Materials und durch entsprechende Präparation seiner inneren Oberflächen kann dieser dielektrische Adsorptionseffekt maximalisiert werden. So wird man die inneren Oberflächen zur Anlagerung von Dichtungsfluid oder von Bestandteilen desselben optimieren z.B. bei einem Wasser oder Wasserdampf enthaltenden Dichtungsfluid die inneren Oberflächen hydrophilisieren. In umgekehrter Weise kann man den Einfluss des Eindringens von Umgebungsatmosphäre oder von Bestandteilen der Umgebungsatmosphäre auf das jeweilige dielektrische Element dadurch minimieren, dass man seine inneren Oberflächen zu möglichst geringer Adsorption präpariert. So ist oft das Eindringen von Wasserdampf aus der Umgebungsatmosphäre in das dielektrische Element nachteilig, da dies zu einer Änderungen der dielektrischen Funktion führt. In einem solchen Falle wird man die inneren Oberflächen hydrophobisieren.

Schließlich ist es in Bezug auf die Nachweisempfindlichkeit von besonderem Vorteil, wenn man dielektrische Element einsetzt, die unter Vakuum in das sie umgebende Dichtungselement eingeschweißt sind. Die inneren Oberflächen sind somit bei intaktem Dichtungssystem im wesentlichen frei von Anlagerungsmolekülen. Die in diesem Fall gemessene dielektrische Funktion unterscheidet sich somit besonders deutlich von der dielektrischen Funktion nach einer Leckage bedingten Anlagerung von Fluidmolekülen, zumal diese durch den hydrostatischen Unterdruck in das dielektrische Element quasi eingesogen werden.

Die Erfindung betrifft auch ein Dichtungssystem mit wenigstens einem porösen dielektrischen Element zur Durchführung des wie vorstehend beschriebenen Verfahrens, sowie ein Dichtungssystem mit wenigstens einem dielektrischen Element in Form eines Kondensatorelements aus einer Mittelschicht aus einem dielektrischen Material das beidseits mit einer Elektrodenschicht versehen ist, wobei die Mittelschicht von einem porösen Material gebildet ist. Hierbei ist auch eine reine Kapazitätsmessung oder Leitfähigkeitsmessung zur Feststellung einer Undichtheit möglich.

Das dielektrische Element des erfindungsgemäßen Dichtungssystems wird aus den vorstehend genannten Gründen bevorzugt unter Vakuum eingeschweißt. Die vakuumdichte Umhüllung des dielektrischen Elements ist dabei so ausgebildet, dass sie im Falle einer Leckage des Dichtungssystems ein Durchtritt des abzudichtenden Fluids zulässt.

Letztere Forderung ist am einfachsten dadurch gewährleistet, dass man das dielektrische Element mit dem Dichtungselement selbst verschweißt, was im Fall gängiger Dichtungsmaterialien wie Teflon ohne weiteres möglich ist.

Zur oben bereits angesprochenen Messung der aktuellen Temperatur des Dichtungssystems ist dieses mit wenigstens einem Temperatursensor versehen, vorzugsweise in Form eines Platin-Film-Widerstands, der am besten in das dielektrische Element integriert ist.

Die Erfindung wird im folgenden an bevorzugten Ausführungsbeispielen anhand der Zeichnung erläutert.

Es zeigt:

| | |
|---|---|
| Figur 1 | einen vereinfachten Längsschnitt durch eine Rohr-Verbindung mit erfindungsgemäßem Dichtungssystem (geschnitten nach Linie I-I in Figur 2); |
| Figur 2 | einen Schnitt nach Linie II-II in Figur 1; |
| Figuren 3A und 3B | den Frequenzverlauf von $\varepsilon'$ bzw. $\varepsilon''$ eines dielektrischen Materials aus mit PTFE Dispersion imprägnierten Aramidfasern im Ausgangszustand sowie nach zwischenzeitlicher Erwärmung auf 25°, 50° und 75° C; |
| Figuren 4A und 4B | den Frequenzverlauf von $\varepsilon'$ bzw. $\varepsilon''$ am gleichen Material jedoch nach zwischenzeitlicher Erwärmung auf 100° C und 125° C; |
| Figur 5 | eine zusammengesetzte Darstellung der aus den Figuren 3A bis 4B gewonnenen Erwärmungsabhängigkeit von $\varepsilon'$ bei 100 Hz und der Temperaturabhängigkeit der gleichzeitig gemessenen Probendicke; |

| Figuren 6A und 6B | die Flächendruckabhängigkeit von ε' bzw. ε" bei 10 Hz des selben Probenmaterials nach zwischenzeitlicher Erwärmung auf 50˚ C; |
|---|---|
| Figuren 7A und 7B | die Flächendruckabhängigkeit von ε' bzw. ε" bei 1 kHz desselben Probenmaterials nach zwischenzeitlicher Erwärmung auf 50˚ C; |
| Figuren 8A und 8B | die Flächendruckabhängigkeit von ε' bzw. ε" bei 100 kHz desselben Probenmaterials nach zwischenzeitlicher Erwärmung auf 50˚ C; |
| Figur 9 | einen Schnitt ähnlich Figur 1 jedoch mit porösem dielektrischem Material des dielektrischen Elements (Schnitt nach Linie IX-IX in Figur 10); |
| Figur 10 | einen Schnitt nach Linie X-X in Figur 9; |
| Figuren 11A und 11B | den Frequenzverlauf von ε' bzw. ε" von Sol-Gel-Gläsern (10 mm ∅, Dicke 0,16 mm) unter Vakuum, unter Umgebungsluft sowie nach Wasserdampfadsobption jeweils bei Raumtemperatur; |
| Figuren 12A und 12B | den Frequenzverlauf von ε' bzw. ε" von PALL-Glasfiberfilterkörpern unter Vakuum bei 60˚, 120˚ und 140˚ C; |
| Figuren 13A und 13B | den Frequenzverlauf von ε' bzw. ε" des gleichen Materials wie in den Figuren 12A und 12B bei den gleichen Temperaturen unter Vakuum sowie zusätzlich in einer Argon-Atmosphäre, und |
| Figuren 14A und 14B | den Frequenzverlauf von ε' bzw. ε" einer Polycarbonatfolie (10mm ∅, Dicke 0,01 mm) bei Raumtemperatur vor und nach Öladsorbtion. |

In den Figuren 1 und 2 ist ein erfindungsgemäßes Dichtungssystem 10 schematisch angedeutet. Es umfasst ein kreisringscheibenförmiges Dichtungselement 12, welches zwischen zwei Ring-Flansche 14 an den Stirnenden zweier Rohre 16 eingesetzt ist. Die Flansche 14 sind ebenso wie das Dichtungselement 12 mit beispielsweise vier Durchgängen versehen, die auf den Kreisumfang verteilt sind und auf gleichem Durchmesser liegen und bei Montage fluchten zur Aufnahme von entsprechenden Flansch-Schraubverbindungen (Schraube 18, Mutter 20). Durch gleichmäßiges Anziehen der vier Schraubverbindungen wird das Dichtungselement 12 zwischen den Flanschen 14 zusammengedrückt, um hierdurch den Rohrinnenraum 22 nach außen hin abzudichten, d.h. ein Entweichen von gasförmigem oder flüssigem Fluid (Dichtungsfluid) nach Außen zu verhindern.

In das Dichtungselement 12 sind insgesamt vier Messsonden in Form dielektrischer Elemente 24 eingesetzt und zwar im dargestellten Beispiel in das Innere des Dichtungselements 12, um dessen Dichtungseigenschaften nicht zu beeinträchtigen. Jedes Dichtungselement besteht aus einer Mittelschicht 26 aus dielektrischem Material sowie zwei Elektrodenschichten 28 an beiden Seiten der Mittelschicht 26. Diese Elektrodenschichten sind mit einer in Figur 1 nur schematisch angedeuteten Mess- und Auswerteeinheit 30 elektrisch verbunden. Die Mess- und Auswerteeinheit 30 legt entsprechende elektromagnetische Wechselfelder an die Elektrodenschichten 28 an, um die dielektrische Funktion des dielektrischen Materials der Mittelschicht 26 in einem weiten Frequenzbereich zu messen. Hierfür stehen eine Vielzahl von gängigen Messverfahren und Messgeräten zur Verfügung (siehe beispielsweise das bereits zitierte Kapitel "Broadband dielectric measurement techniques" in "Broadband dielectric spectroscopy" F. Kremer, A. Schönhals (Eds.), Springer Verlag, Berlin 2002).

An Stelle eines in das Dichtungselement 12 eingebetteten dielektrischen Elements 24 kann auch ein dielektrisches Element eingesetzt werden, dessen Mittelschicht vom Dichtungselement 12 selbst gebildet wird und dessen in Figur 1 strichliert angedeuteten Elektrodenschichten 28' an den Seitenflächen des Dichtungselements 12 vorgesehen sind ggf. mit äußerer Abdeckfolie 29.

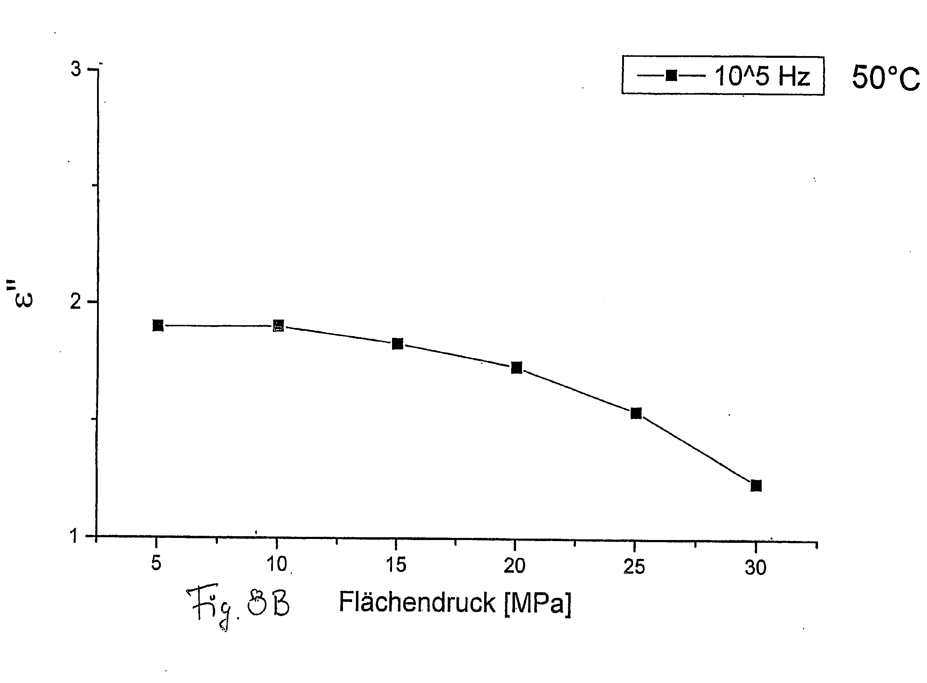

Die in den Figuren 3 bis 8B gezeigten Messergebnisse wurden mit Hilfe eines "Dielektrischen Spektrometers" der Firma Novocontrol, Hundsangen, DE ermittelt. Das dielektrische Material der Mittelschicht 26, welches in diesem Ausführungsbeispiel dem Dichtungsmaterial des Dichtungselements 12 entsprach, bestand aus Aramidfasern, die mit einer PTFE-Dispersion imprägniert waren. Die Dimensionen des dielektrischen Elements 24 gemäß Figuren 1 und 2 sind nicht maßstäblich angegeben. Man erhält ausreichend Empfindlichkeit bereits bei dielektrischen Elementen mit einer Elektrodenfläche von 5 mm$^2$ und einer Gesamtdicke des dielektrischen Elements von ca. 10 μm. Diese Abmessungen ergeben eine Kapazität von ca. 100 pF, die leicht gemessen werden kann.

Um den Einfluss einer Alterung des Dichtungsmaterials auf die dielektrische Funktion festzustellen, wurde sowohl ε' als auch ε" in einem Frequenzbereich zwischen 1 Hz und 500 kHz gemessen und zwar jeweils bei einem mechanischen Flächendruck von 25 MPa. Die mit einem Rechteck gekennzeichneten Messpunkte wurden bei der ersten Messung erhalten. Die übrigen Messungen wurden nach zwischenzeitlicher Erwärmung auf 25˚ bzw. 50˚ bzw. 75˚ bzw. 100˚ bzw. 125˚ im weiterhin eingespannten Zustand und anschließender Abkühlung auf etwa Raumtemperatur gemessen.

Man erkennt, dass die dielektrischen Spektren durch eine Stufe in $\varepsilon'$ und $\varepsilon''$ charakterisiert sind, die sich bei ansteigender zwischenzeitlicher Erwärmungstemperatur zu höheren Frequenzen verschiebt. Eine derartige Abhängigkeit ist für einen Relaxationsprozess typisch. Ab einer Temperatur von ca. 100˚ C zerfallen die PTFE-Mizellen. Folgerichtig verschwindet die Stufe in $\varepsilon'$ und $\varepsilon''$ (Figur 4A und 4B). Die elektrische Leitfähigkeit, die durch den Anstieg in $\varepsilon''$ zu niedrigen Frequenzen hin bestimmt ist, nimmt dagegen um ca. 1 bis 2 Größenordnungen zu. Gleichzeitig bewirkt der ionische Ladungstransport mit resultierender Elektrodenpolarisation eine Zunahme von $\varepsilon'$ auf der Niederfrequenzseite.

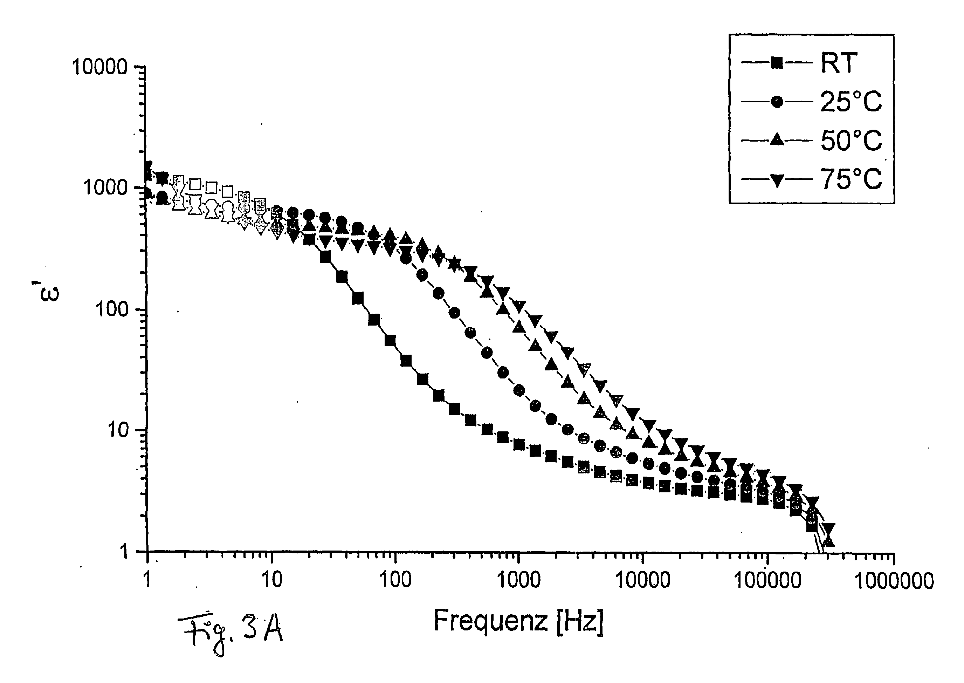

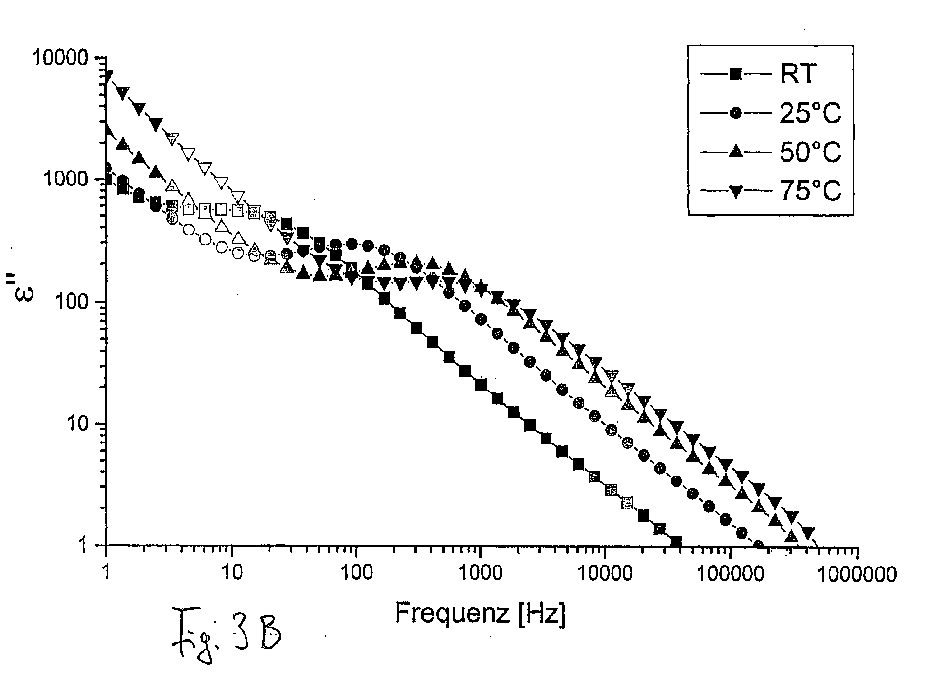

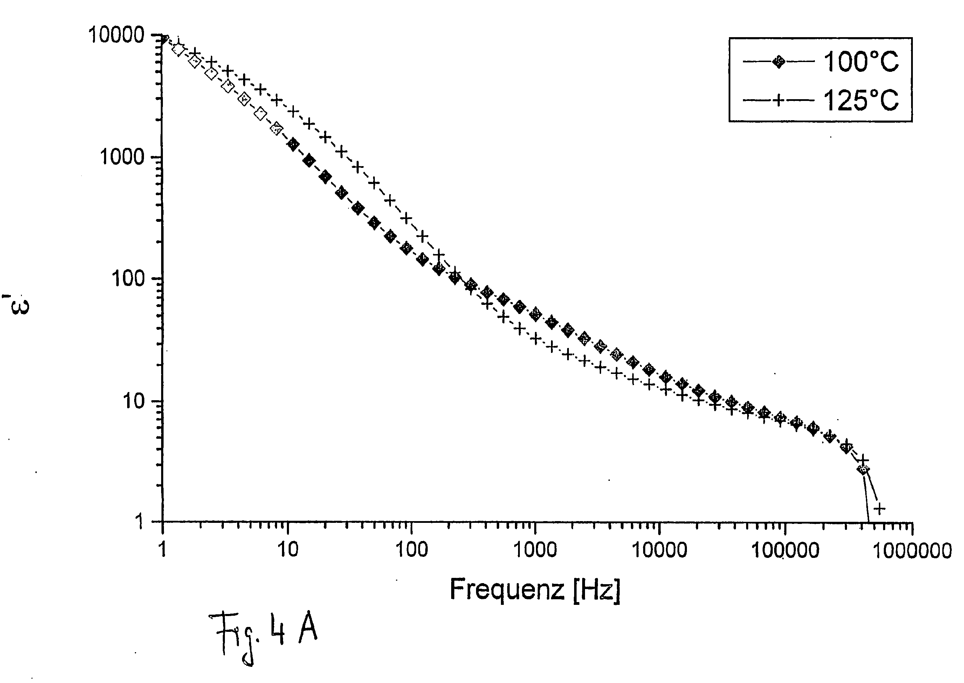

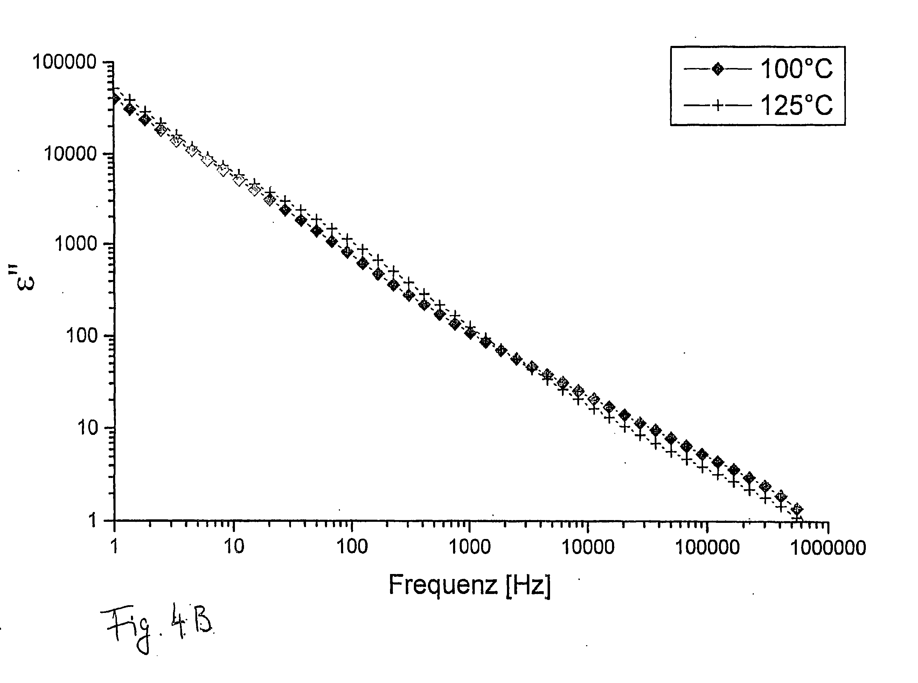

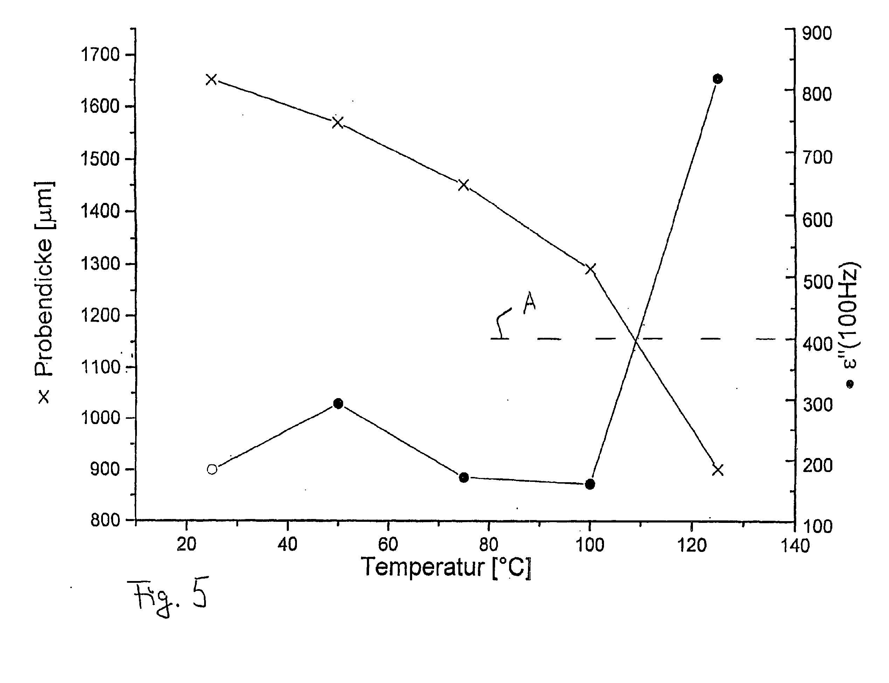

Vergleicht man die in Figur 5 aufgetragene Abnahme der Probendicke (= Dicke d des Dichtungselements 12 gemäß Figur 1) mit dem bei den Messungen herrschenden Flächendruck von 25 MPa mit ansteigender Temperatur, so findet man ab ca. 100˚ C eine starke Abnahme. Dies resultiert offenbar aus einem Zusammenbruch der viskoelastischen Rückstellkräfte des Polymermaterials bei der thermisch induzierten Degradation der Mizellen-Struktur. Gleichzeitig zeigt der Wert von $\varepsilon''$ bei 100 Hz einen steilen Anstieg.

Hieraus lässt sich schließen, dass das Dichtungsmaterial nach zwischenzeitlichen Erwärmungen über 100˚ C nicht mehr funktionstüchtig ist, was einem Wert von $\varepsilon''$, gemessen bei 100 Hz deutlich oberhalb eines Grenzwerts A von beispielsweise 400 entspricht.
Man kann nun ohne weiteres annehmen, dass sich eine Alterung des Dichtungsmaterials, die im Zeitraffer durch das Temper-Programm simuliert wurde, sich in gleicher Weise auf $\varepsilon''$, gemessen bei 100 Hz, auswirkt.

Für das hier speziell verwendete Dichtungsmaterial wird man daher als Formparameter $\varepsilon''$, gemessen bei 100 Hz, wählen und diesen laufend während des Einsatzes des Dichtungssystems messen und dabei mit dem Grenzwert A vergleichen. Wird der Grenzwert A überschritten, so muss das Dichtungselement ausgetauscht werden.

Je nach der Zusammensetzung des verwendeten Dichtungsmaterials könnten auch andere Formparameter gewählt werden, oder auch Kombinationen von wenigstens zwei Formparametern.

Beispiel hierfür ist die Messung des dielektrischen Verlusts bei Materialien mit erkennbarem Peak in $\varepsilon''$, wie z.B. bei vulkanisiertem Hartgummi, bei Frequenzen im Allgemeinen größer als 1 kHz.

Bei einem Dichtungsmaterial aus in den Nitrilkautschuk eingebetteten Fasern aus aromatischem Polyamid (z.b. Armidfasern) hat sich die folgende Kombination bewährt:

1. Formparameter: Steigung des Realteils bei niedrigen Frequenzen vorzugsweise < 100 Hz; 2. und 3. Formparameter: Absolutwerte des Realteils und des Imaginärteils bei hohen Frequenzen, vorzugsweise > 1 kHz.

Die entsprechenden Grenzwerte sind wiederum durch Vergleichsmessungen mit Simulation der Materialalterung zu ermitteln.

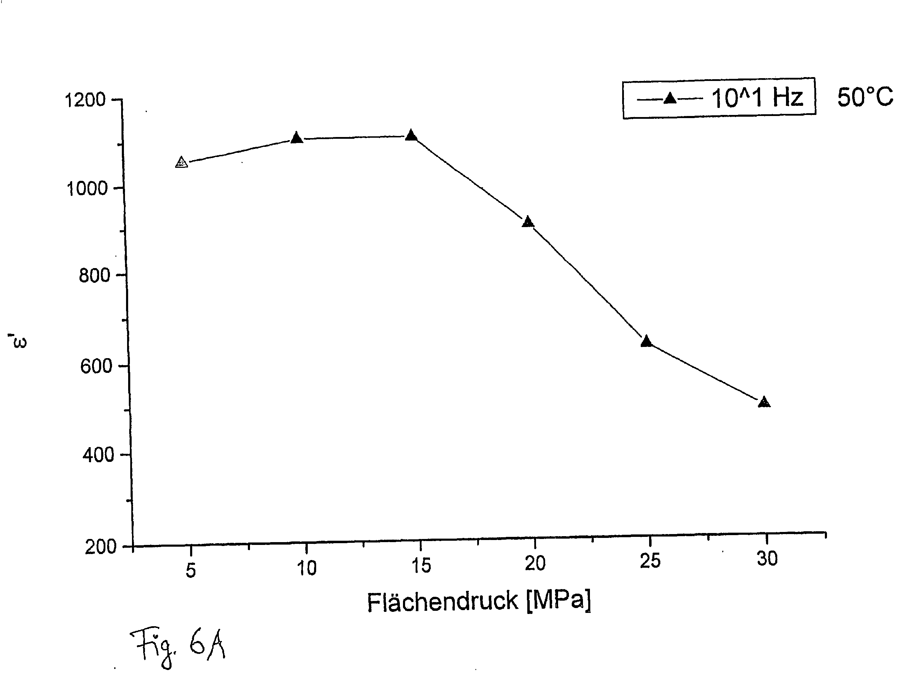

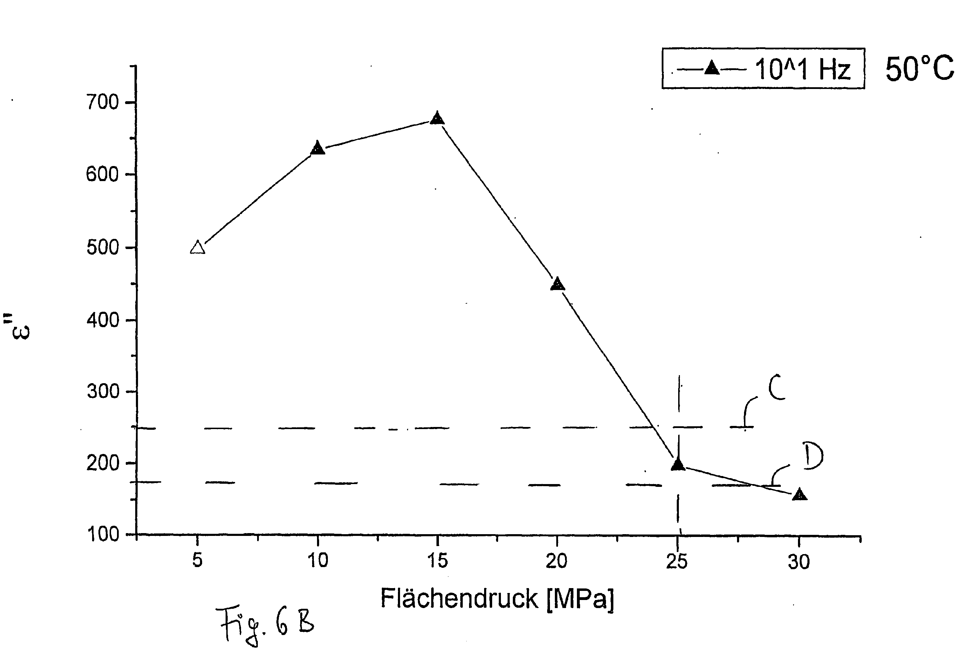

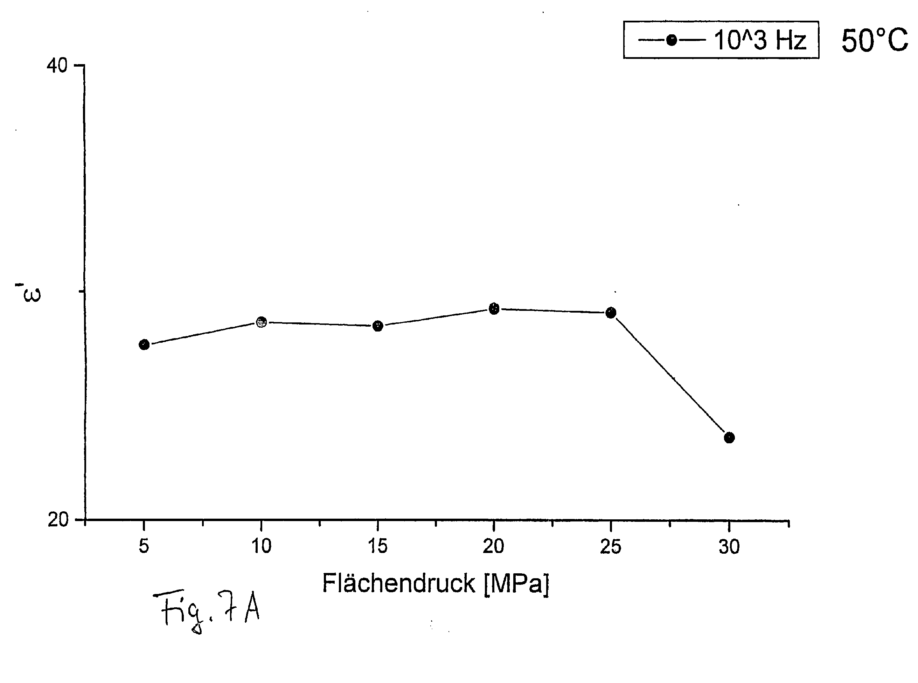

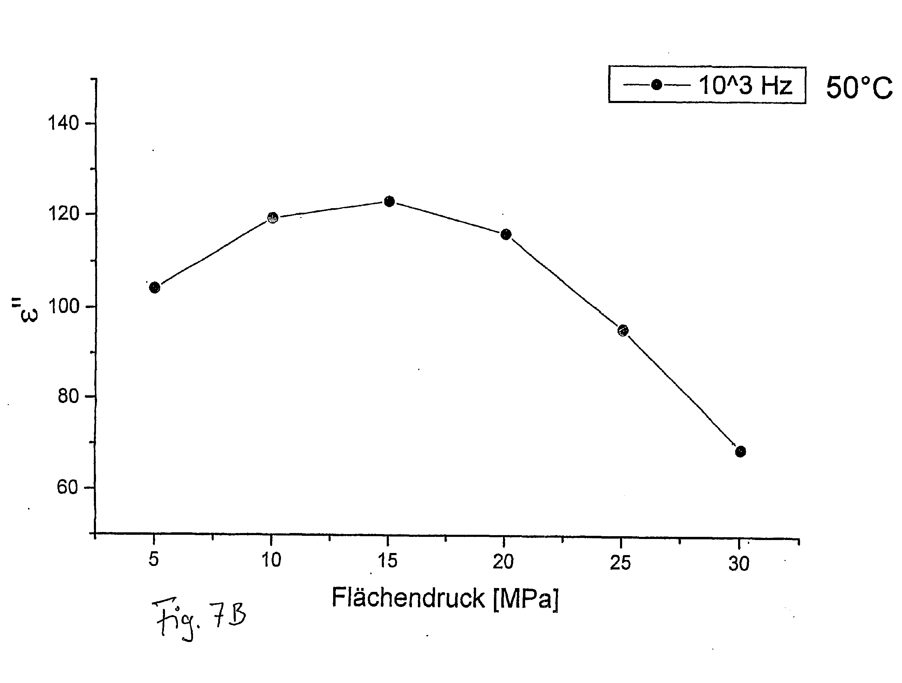

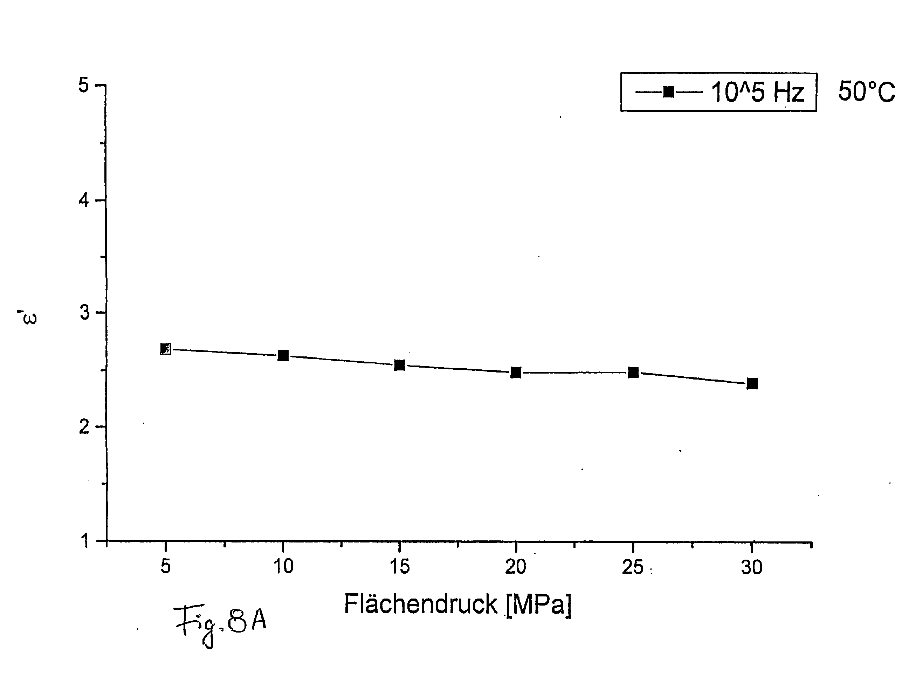

Neben der Alterung als Zustandsparameter des Dichtungssystems kann als weiterer Zustandsparameter die korrekte Lage des Dichtungssystems ermittelt werden. Um dies zu belegen wurden druckabhängige Messungen gemäß Figuren 6B, b für $\varepsilon'$ und $\varepsilon''$ mit den Frequenzen 10 Hz, 1 kHz und 100 kHz durchgeführt und zwar nach einmaliger zwischenzeitlicher Erwärmung auf 50˚ C, um ein Setzen des Dichtungssystems sicher zustellen. Man erkennt eine mehr oder weniger starke Flächendruckabhängigkeit. Am ausgeprägtesten ist diese für $\varepsilon''$ bei 10 Hz gemäß Figur 6B.

Dieser Effekt lässt sich daher gut zur Überprüfung der korrekten Einbaulage ausnützen, in dem die von den beispielsweise vier auf den Umfang des Dichtungselements 12 verteilten dielektrischen Elementen 24 gelieferten Messwerte für $\varepsilon''$ bis 10 Hz miteinander verglichen werden. Bei einer ein vorgegebenes Maß überschreitenden Abweichung der Messwerte voneinander kann auf schiefe Einbaulage geschlossen werden. Alternativ kann man wiederum auch materialspezifische Grenzwerte einführen, wie beispielsweise die Grenzwerte C und D in Figur 6B bei einem Soll-Flächendruck von 25 MPa. Werden diese Grenzwerte von dem einen oder anderen dielektrischen Element 24 überschritten, so wird auf falsche Montage geschlossen.

Ein weiterer Zustandsparameter des Dichtungssystems, der gemäß der Erfindung erfasst werden kann, ist der der Dichtheit des Dichtungssystems. Die Messsonde ist hier wiederum das dielektrische Element. Es besteht aus solchem dielektrischen Material, welches in der Lage ist, das abzudichtende Fluid aufzunehmen mit entsprechender Veränderung seiner dielektrischen Funktion. Es wird poröses dielektrisches Material eingesetzt, wobei Materialien zur Verfügung stehen mit extrem hoher innerer Oberfläche zur Aufnahme dementsprechend großer Mengen des Fluids. Derartige Materialien mit Kapillardurchmessem im $\mu$m-Bereich oder nm-Bereich haben innere Oberflächen > 10 m$^2$/g aber auch > 100 m$^2$/g. Dies führt zu einer drastischen Änderung der gesamten dielektrischen Funktion in einem großen Frequenzbereich einschließlich bei der Frequenz < 0,01 Hz (Gleichstromlimit). Man kann also in manchen Fällen auch durch einfache Kapazitätsmessung die Dichtheit überwachen.

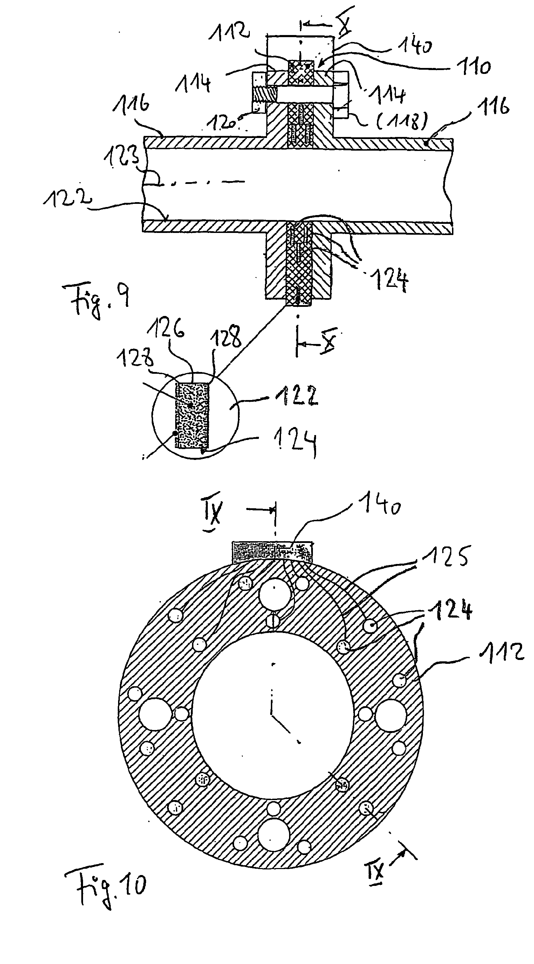

In den Figuren 9 und 10 ist ein weiteres erfindungsgemäßes Ausführungsbeispiel wiederum nur schematisch angedeutet. Man erkennt wiederum ein Dichtungssystem 110 aus dem eigentlichen ringscheibenförmigen Dichtungselement 112, welches mit Hilfe von insgesamt vier Verschraubungen (Kopfschraube 118, Mutter 120) zwischen zwei Flansche 114 in Richtung der Rohrachse 123 zusammengepreßt wird. Die beiden Flansche 114 sind an einander zugewandten Enden zweier Rohre 116 vorgesehen. Das Dichtungssystem 110 dient der Abdichtung zwischen dem Rohrinnenraum 122 und der Umgebung.

Im dargestellten Ausführungsbeispiel bestehen die dielektrischen Elemente 124 wiederum aus drei Schichten, der Mittelschicht 126 aus porösem dielektrischen Material und den beiden seitlichen Elektrodenschichten 128. Letztere sind wiederum über in Figur 10 angedeutete elektrische Leitungen 125 aus dem Dichtungselement 112 herausgeführt und in einem schematisch angedeutetem Anschlussteil 140 am Außenumfang des Dichtungselements 112 zusammengeführt. In nicht dargestellter Weise kann das Anschlussteil 140 mit einer Mess- und Auswerteeinheit (entsprechend 30 gemäß Figur 1) verbunden werden.

Die dielektrischen Elemente 124 sind wiederum nicht maßstabsgetreu dargestellt. Sie können eine Elektrodenfläche von 5 mm$^2$ aufweisen bei einer Dicke von ca. 10 $\mu$m. Dies ergibt eine Kapazität von ca. 100 pF, die leicht messtechnisch erfasst werden kann.

Die dielektrischen Elemente 124 sind wiederum in das Dichtungsmaterial des Dichtungselements 112 eingebaut, so dass sich eine ungestörte Dichtfläche des Dichtungselements 112 auf dessen beiden Seiten ergibt.

Die dielektrischen Elemente 124 können gemäß Figur 10 auf den Umfang des Dichtungselements 112 verteilt angeordnet sein, wobei zusätzlich eine Staffelung in Richtung der Rohrachse 123 gemäß Figur 9 vorgesehen sein kann. Durch diese Verteilung erreicht man eine gleichmäßige Überwachung des Volumens des Dichtungselements 112. Falls das abzudichtende Fluid an irgendeiner Stelle in das Dichtungselement 112 eindringt, so trifft dieses Fluid früher oder später auf eines der porösen dielektrischen Elemente 124. Dieses nimmt dann aufgrund seiner großen Kapillarkräfte (in Bezug auf das verwendete Fluid) eine vergleichsweise große Menge an Fluid auf, mit dementsprechend drastischer Änderung seiner dielektrischen Funktion einschließlich seiner Kapazität. Wenn also die Dichtung brüchig wird, oder einzelne Risse auftreten, so kann dies zuverlässig anhand der Messung der dielektrischen Funktion bzw. der Kapazität ermittelt werden.

Auch hier wird man in Abhängigkeit vom verwendeten Material einen geeigneten Formparameter ermitteln, und durch Vergleichsmessungen mit Druckerhöhung bis zur Undichtigkeit einen geeigneten Grenzwert für diesen Formparameter festlegen.

Bei dem porösen dielektrischen Material kann es sich ggf. auch um dieselbe Substanz handeln, die für das Dichtungselement selbst eingesetzt wird, da manche Materialien insbesondere PTFE sowohl als kompaktes (nicht poröses) Material existieren als auch in poröser Form.

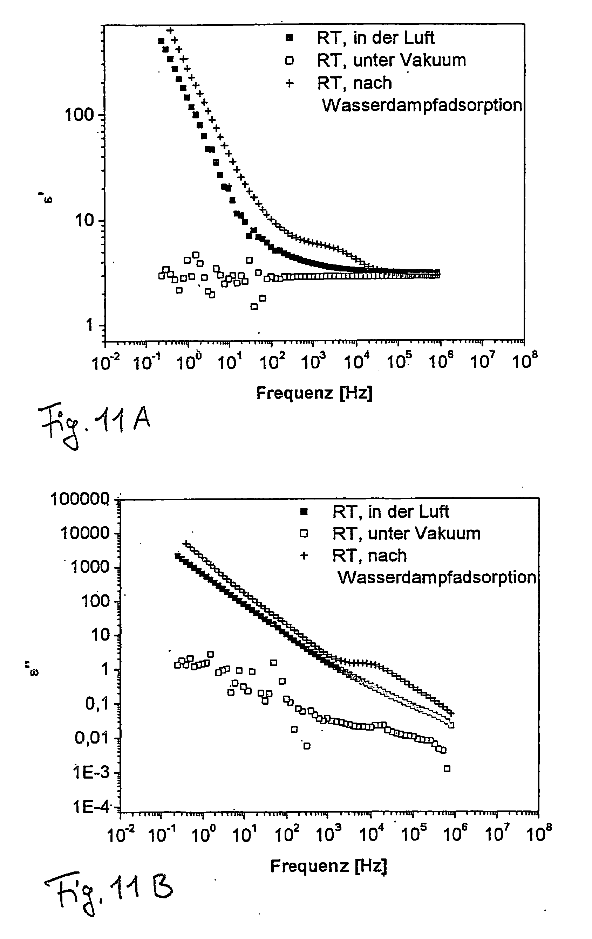

Die Figuren 11A und B zeigen, wie sich die dielektrische Funktion in Abhängigkeit von dem Grad einer Wasserdampfadsorption bei einem mikroporösen dielektrischen Material der Firma Schott mit Sitz in Mainz, Deutschland, erhältlich unter der Bedruckbezeichnung "Sol-Gel-Glas". Die Probe war dabei 0,16 mm dick bei einem Scheibendurchmesser von 10 mm und einem Porendurchmesser von 7,5 nm. Die Messung wurde bei Raumtemperatur (RT) durchgeführt. Man erkennt, dass $\varepsilon$' nach Wasserdampfadsorbtion bei Frequenzen unterhalb von ca. 5 x 10$^4$ Hz im Vergleich zur Messung in Umgebungsatmosphäre deutlich erhöht ist unter Beibehaltung des charakteristischen Anstiegs zu niedrigen Frequenzen hin. Vergleicht man dagegen mit einer Messung unter Vakuum ergeben sich wesentlich größere Unterschiede zu niedrigen Frequenzen hin, da unter Vakuum $\varepsilon$' über einen Frequenzbereich zwischen 10$^6$ und 10$^2$ Hz angenähert konstant ist und zu niedrigeren Frequenzen bis zu 0,1 Hz hin um diesen konstanten Wert streut.

Auch bei $\varepsilon$" ergibt sich eine nicht allzu große jedoch deutlich erkennbare Verschiebung nach oben, wenn zuerst unter Atmosphärenbedingungen gemessen wird (relative Luftfeuchtigkeit $\leq$ 30%) sowie nach Wasserdampfadsorption (relative Luftfeuchtigkeit 100%). Wesentlich deutlicher ist der Unterschied jedoch auch hier, wenn man von einer Messung unter Vakuum (d.h. absoluter Druck < 1 mbar) ausgeht.

Um diesen Effekt auszunutzen, wird daher das jeweilige dielektrische Element unter Vakuum (Druck < 1 mbar) eingeschweißt, am Besten in das Dichtungselement selbst (siehe Figur 9, 10). Dies ist bei gängigen Dichtungsmaterialien wie Polytetraflurethylen (Teflon) ohne weiteres möglich.

Kommt es aus welchen Gründen auch immer zu einer Undichtigkeit des Dichtungssystems, so erreichen die entsprechenden Haarrisse auch die in das Material des Dichtungselements eingebetteten dielektrischen Elemente. Diese saugen quasi das in das Dichtungssystem eindringende Dichtungsfluid (hier Wasser oder Wasserdampf) ein mit der Folge der Adsorption an den inneren Oberflächen. Die dielektrische Funktion verändert sich gravierend, wie die Figuren 11A und 11 B exemplarisch zeigen.

Aus den Figuren 11A und 11B können geeignete Grenzwerte abgeleitet werden, bei deren Überschreiten auf Undichtigkeit des Dichtungssystems geschlossen werden kann. Eine Überwachungsschaltung gibt daraufhin entsprechend Alarm ab, so dass rechtzeitige Gegenmaßnahmen ergriffen werden können.

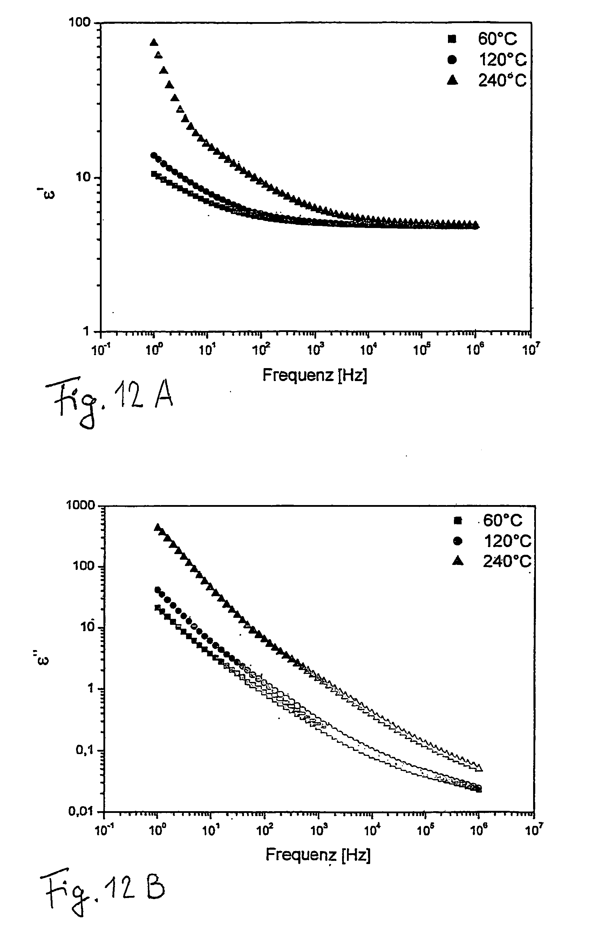

Die Figuren 12A und 12B demonstrieren die deutliche Temperaturabhängigkeit der dielektrischen Funktion, wobei in diesem Falle ein Fiberglasfilterelement der Firma Pall, Life Sciences mit Vertretung durch VMR International GmbH, Frankfurter Str. 133, 64293 Darmstadt, Deutschland verwendet wurde, mit einem Scheibendurchmesser von 10 mm, einer Dicke von 330 $\mu$m und einem Porendurchmesser von 1,0 $\mu$m. Diese Messungen erfolgten unter Vakuum.

Eine Verdoppelung der Ausgangstemperatur von 60˚ C auf 120˚ C ergibt eine geringfügige Erhöhung von ε' bei Frequenzen unter 100 Hz sowie von ε" bei Frequenzen unterhalb $10^3$ Hz. Eine weitere Verdopplung auf 240˚ C ergibt jedoch eine deutliche Erhöhung von ε' bei Frequenzen unterhalb $10^4$ Hz sowie eine generelle Erhöhung von ε" im gesamten Frequenzbereich.

Hieraus folgt für Dichtungssysteme, die nicht unter annähernd gleichbleibenden Temperaturen betrieben werden wie z.B. bei Anlagen mit gasförmigen Dichtungsfluid (Radon, gasförmige Toluol, Methan und Wasserdampf), das hier zweckmäßigerweise auch die jeweilige momentane Betriebstemperatur berücksichtigt wird.

Die Erfassung der Betriebstemperatur kann in üblicher Weise durch Temperatursensoren erfolgen wie z.B. im Form eines Plantin-Film-Widerstands. In Figur 1 ist ein derartiger Temperatursensor 31 an der Außenseite der Rohrleitung 16 im Bereich des Ring-Flansches 14 angedeutet, der beispielsweise mit der Mess- und Auswerteeinheit 30 elektrisch verbunden ist. Man kann auch daran denken, den Temperatursensor in das Dichtungselement oder sogar in das dielektrische Element zu integrieren.

Um den vorstehend veranschaulichten Temperatureffekt zu kompensieren, kann man einerseits so vorgehen, dass man ähnlich Figur 12A und 12B in dem üblichen Betriebstemperaturbereich eine Vielzahl von Messungen bei unterschiedlichen Temperaturen über den Betriebstemperaturbereich verteilt aufnimmt und als Vergleichsmessungen abspeichert. Während des aktuellen Betriebes wird dann die aktuelle Messung bei der aktuellen Betriebstemperatur mit derjenigen Vergleichsmessung verglichen, die bei einer der Betriebstemperatur nächstkommenden Temperatur gemessen wurde. Ergeben sich dann signifikante Abweichungen, kann auf eine Änderung des interessierenden Zustandsparameters geschlossen werden, d.h. beispielsweise auf eine Undichtigkeit des Systems oder auf eine Alterung des Dichtungssystems.

Man kann aber auch in der folgenden Weise mathematisch eine Kompensation des Temperatureffekts erreichen:

Die gemessene Temperatur- und Frequenzabhängigkeit der komplexen dielektrischen Funktion kann durch folgende Funktion angepasst werden:

$$\varepsilon'(\omega, T) = \varepsilon_\infty + A\omega^{-\lambda_1} + \mathrm{Re}\left(\frac{\Delta\varepsilon}{\left(1 + (i\omega\tau)^\alpha\right)\gamma}\right)$$

$$\varepsilon''(\omega, T) = B\omega^{-\lambda_2} + \mathrm{Im}\left(\frac{\Delta\lambda}{1 + \left((i\omega\tau)^\alpha\right)\gamma}\right)$$

mit Konstanten $\varepsilon_\infty$, A, B, $\lambda_1$, $\lambda_2$, $\Delta\varepsilon$, $\tau$, $\alpha$ und $\gamma$, wobei

$$\mathrm{Re}\left(\frac{\Delta\lambda}{1 + \left((i\omega\tau)^\alpha\right)\gamma}\right) \text{ und } \mathrm{Im}\left(\frac{\Delta\lambda}{1 + \left((i\omega\tau)^\alpha\right)\gamma}\right)$$ den Real- bzw. Imaginärteil bezeichnen. Dabei werden die Relaxationsprozesse durch die so genannte Havriliak-Negami-Funktion und die Elektrodenpolarisation durch Potenzgesetze mit $\omega^{-\lambda_1}$ und $\omega^{-\lambda_2}$ beschrieben. Solche Anpassungen können durch "Least-Square-Verfahren" problemlos und schnell automatisch für verschiedene Temperaturen durchgeführt werden, um so die gesamte dielektrische Funktion in ihrer Frequenz- und Temperaturabhängigkeit zu charakterisieren. Der sich ergebende - klarerweise materialspezifische Datensatz - kann dann genutzt werden, um zu entscheiden - gegebenenfalls mittels Interpolation - ob das Dichtungsmaterial von der Norm abweichende Eigenschaften zeigt, die auf eine Leckage, auf chemische Degradation oder physikalische Alterung hinweisen. Das gesamte Verfahren lässt sich problemlos automatisieren.

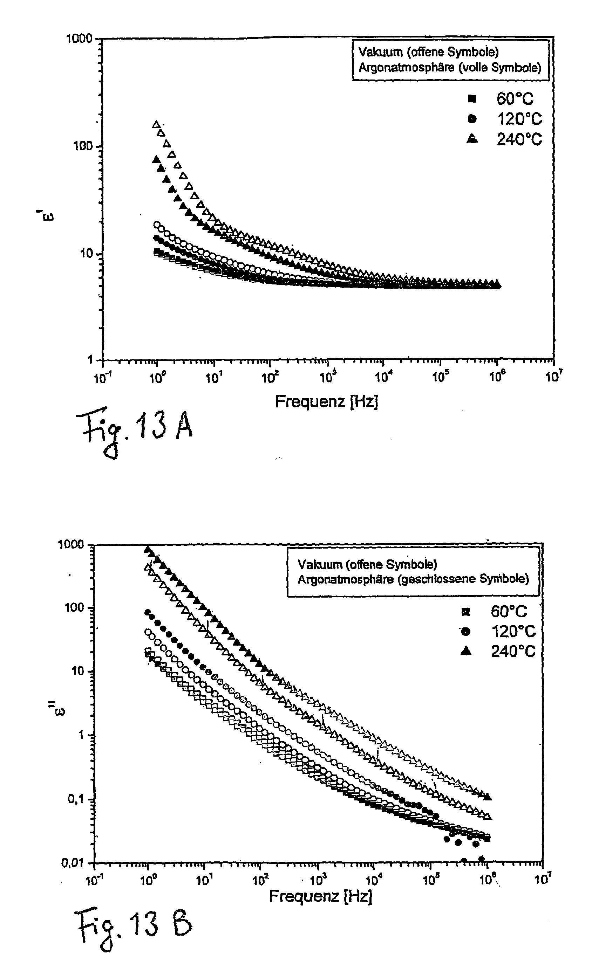

Die Figuren 13A und B zeigen zusätzlich zu den Messkurven gemäß Figuren 12A und 12B unter Vakuum auch noch die Messkurven bei den entsprechenden Temperaturen in Argon-Atmosphäre (geschlossene Symbole). Man erkennt die Bedeutung der Temperaturabhängigkeit, da generell sowohl eine Temperaturerhöhung als auch eine Anlagerung von Argon zu einer Erhöhung von ε' und ε" führt. Bei 60° C ergibt eine Argonanlagerung in ε" nur eine sehr geringe Erhöhung und in ε' bei Frequenzen unterhalb 10 Hz sogar eine geringfügige Erniedrigung. Die aktuelle Messtemperatur ist also bei der Auswertung der Messung wie vorstehend beschrieben zu berücksichtigen.

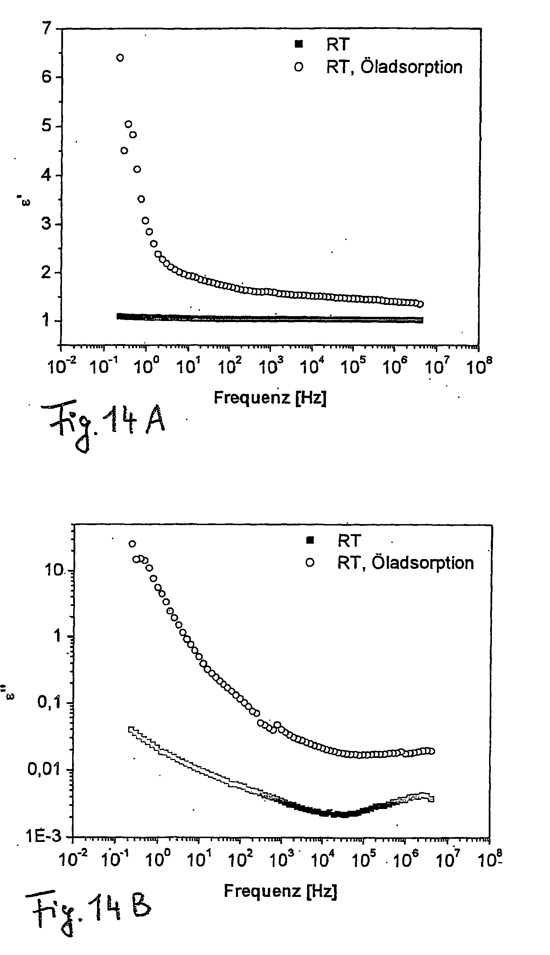

Die Figuren 14A und 14B schließlich zeigen die Auswirkung einer Öladsorption bei einer Mikrokapillarpolykarbonatfolie mit Scheibendurchmesser 10 mm und Dicke 10 μm und einem Porendurchmesser von 0,1 μm gemessen bei Raumtemperatur (RT). Man erkennt deutliche Änderungen in ε' und ε". Während ε' vor der Öladsorption über den gesamten Frequenzbereich konstant ist, ergibt sich nach Öladsorption ein starker Anstieg zu niedrigen Frequenzen hin. ε" hat einen kurvigen Verlauf vor der Öladsorption mit starke Erhöhung unter Beibehaltung des prinzipiellen Kurvenverlaufs (Abfall zu niedrigen Frequenzen hin) nach Öladsorption.

Insgesamt erhält man ein "intelligentes Dichtungssystem" durch Erfassung der dielektrischen Funktion in einem weiten Frequenzbereich, welche ggf. auch das Gleichstromlimit einschließt. Insbesondere können eine schiefe Einbaulage, ein Altern des Dichtungssystems sowie Leckagen zuverlässig erfasst werden.

**Bezugszeichenliste**

| | |
|---|---|
| 10 | Dichtungssystem |
| 12 | Dichtungselement |
| 14 | Ring-Flansch |
| 16 | Rohrleitung |
| 18 | Schraube |
| 20 | Schaubenmutter |
| 22 | Rohrinnenraum |
| 24 | dielektrisches Element |
| 26 | dielektrische Mittelschicht |
| 28 | Elektrodenschicht |
| 28' | Elektrodenschicht |
| 29 | Abdeckfolie |
| 30 | Mess- und Auswerteeinheit |
| 31 | Temperatursensor |
| 110 | Dichtungssystem |
| 112 | Dichtungselement |
| 114 | Flansch |
| 116 | Rohr |
| 118 | Kopfschraube |
| 120 | Schraubenmutter |
| 122 | Rohrinnenraum |
| 123 | Rohrachse |
| 124 | dielektrisches Element |
| 125 | elektrische Leitungen |
| 126 | dielektrische Mittelschicht |
| 128 | Elektrodenschicht |
| 140 | Anschlußteil |

**Patentansprüche**

1. Verfahren zur Feststellung wenigstens eines Zustandsparameters eines Dichtungssystems (10, 100) mit wenigstens einem Dichtungselement (12, 112) und wenigstens einem dielektrischen Element (24, 124), welches dielektrisches Material enthält, wobei man den Realteil und/oder den Imaginärteil der komplexen dielektrischen Funktion des dielektrischen Elements misst, wobei das dielektrische Material (26, 126) des dielektrischen Elements (24, 124) von einem porösen Material gebildet ist
und
das dielektrische Element (24, 124) Teil des Dichtungselements (12, 112) des Dichtungssystems (10, 110) ist.

2. Verfahren nach Anspruch 1,
**dadurch gekennzeichnet, dass**

das poröse Material hohe Kapillarität, vorzugsweise mit einer inneren Oberfläche > 10 m$^2$/g, besser > 100 m$^2$/g gegenüber dem Fluid, gegen das das Dichtungssystem abdichten soll, aufweist.

3. Verfahren nach einem der vorhergehenden Ansprüche,
   **dadurch gekennzeichnet, dass**
   das dielektrische Element (24, 124) von einer Kondensatoranordnung gebildet ist aus 2 Elektrodenschichten (28, 28', 128) beidseits einer Mittelschicht (26, 126) aus dem dielektrischen Material.

4. Verfahren nach Anspruch 3,
   **dadurch gekennzeichnet, dass**
   das dielektrische Element (24, 124) eine Dicke von weniger als 1 mm, vorzugsweise weniger als 100 $\mu$m am besten von etwa 10 $\mu$m aufweist.

5. Verfahren nach Anspruch 4,
   **dadurch gekennzeichnet, dass**
   das dielektrische Element (24, 124) eine Kapazität von 1 pF bis 1000 pF, am besten von etwa 100 pF aufweist

6. Verfahren nach einem der vorhergehenden Ansprüche,
   **dadurch gekennzeichnet, dass**
   man ein dielektrisches Element einsetzt, dessen innere Oberflächen zu möglichst weitgehender Anlagerung des Dichtungsfluids oder von Bestandteilen desselben präpariert sind.

7. Verfahren nach einem der vorhergehenden Ansprüche,
   **dadurch gekennzeichnet, dass**
   man ein dielektrisches Element einsetzt, dessen innere Oberflächen zu möglichst geringfügiger Anlagerung eines Umgebungsfluids oder von Bestandteilen desselben präpariert sind.

8. Verfahren nach Anspruch 6 und/oder Anspruch 7,
   **dadurch gekennzeichnet, dass**
   die inneren Oberflächen hydrophobisiert oder hydrophilisiert sind.

9. Verfahren nach einem der vorhergehenden Ansprüche,
   **dadurch gekennzeichnet, dass**
   man die jeweilige Temperatur des wenigstens einen Dichtungselements misst und bei der Bewertung der gemessenen komplexen dielektrischen Funktion berücksichtigt.

10. Verfahren nach Anspruch 9,
    **dadurch gekennzeichnet, dass**
    man im möglichen Betriebstemperaturbereich des Dichtungssystems bei wenigstens zwei unterschiedlichen Temperaturen Vergleichsmessungen vornimmt, und dass man das aktuelle Messergebnis bei der aktuellen Temperatur mit der Vergleichsmessung bei der nächstkommenden Temperatur vergleicht.

11. Verfahren nach Anspruch 9,
    **dadurch gekennzeichnet, dass**
    man aus dem aktuellen Messergebnis und der aktuellen Temperatur ein temperaturkorrigiertes Messergebnis ableitet.

12. Verfahren nach Anspruch 9,
    **dadurch gekennzeichnet, dass**
    man aus dem Formparameter und der aktuellen Temperatur einen temperaturkorrigierten Formparameter ableitet.

13. Verfahren nach einem der vorhergehenden Ansprüche,
    **dadurch gekennzeichnet, dass**
    man bei wenigstens einer Frequenz > 10$^{-2}$ Hz misst.

14. Verfahren nach Anspruch 13,
    **dadurch gekennzeichnet, dass**
    die mindestens eine Frequenz im Frequenzbereich von 0,1 Hz bis 10 MHz, vorzugsweise 100 Hz bis 100 kHz liegt.

**15.** Verfahren nach einem der vorhergehenden Ansprüche,
**dadurch gekennzeichnet, dass**
man einen charakteristischen Frequenzverlauf des Realteils und/oder des Imaginärteils der dielektrischen Funktion durch Messungen des Realteils bzw. des Imaginärteils der komplexen dielektrischen Funktion des dielektrischen Elements bei unterschiedlichen Frequenzen ermittelt, wobei die Messungen bei wenigstens zwei, vorzugsweise bei wenigstens 10, besser bei wenigstens 30 unterschiedlichen Frequenzen vorgenommen werden.

**16.** Verfahren nach Anspruch 15,
**dadurch gekennzeichnet, dass**
man wenigstens einen Formparameter des Frequenzverlaufs ermittelt.

**17.** Verfahren nach Anspruch 16,
**dadurch gekennzeichnet, dass**
der Formparameter ein Absolutwert oder eine Steigung oder eine Krümmung des Frequenzverlaufs bei einer vorgegebenen Frequenz ist.

**18.** Verfahren nach Anspruch 16,
**dadurch gekennzeichnet, dass**
der Formparameter die Frequenzlage oder die Amplitude eines charakteristischen Abschnitts des Frequenzverlaufs ist.

**19.** Verfahren nach Anspruch 18,
**dadurch gekennzeichnet, dass**
der charakteristische Abschnitt eine Stufe oder ein Peak ist.

**20.** Verfahren nach einem der Ansprüche 16 bis 19,
**dadurch gekennzeichnet, dass**
wenigstens einer der Formparameter die Steigung des Realteils bei niedrigen Frequenzen, vorzugsweise $\leq 100$ Hz ist.

**21.** Verfahren nach einem der Ansprüche 16 bis 20,
**dadurch gekennzeichnet, dass**
wenigstens einer der Formparameter der Absolutwert des Realteils oder des Imaginärteils bei hohen Frequenzen vorzugsweise $\geq 1$ kHz ist.

**22.** Verfahren nach einem der Ansprüche 16 bis 21,
**dadurch gekennzeichnet, dass**
der wenigstens eine Formparameter der Absolutwert des Imaginärteils bei einer Frequenz zwischen 10 Hz und ein 1 kHz, vorzugsweise von etwa 100 Hz ist.

**23.** Verfahren nach einem der Ansprüche 16 bis 22,
**dadurch gekennzeichnet, dass**
der wenigstens eine Formparameter die Fläche unterhalb eines Peaks des Frequenzverlaufs des Imaginärteils ist.

**24.** Verfahren nach einem der Ansprüche 16 bis 23,
**dadurch gekennzeichnet, dass**
der wenigstens eine Formparameter der Quotient aus den Absolutwerten des Imaginärteils und des Realteils ist, vorzugsweise bei einer Frequenz $\leq 1$ kHz.

**25.** Verfahren nach einem der vorhergehenden Ansprüche,
**dadurch gekennzeichnet, dass**
man an mehreren Stellen, vorzugsweise an 3 oder 4 Stellen, des Dichtungselements (12, 112) ein dielektrisches Element (24, 124) vorsieht und jeweils den Realteil und/oder den Imaginärteil der dielektrischen Funktion misst.

**26.** Verfahren nach Anspruch 25,
**dadurch gekennzeichnet, dass**
man die an mehreren Stellen erhaltenen Messergebnisse miteinander vergleicht und bei einer ein vorgegebenes Maß überschreitenden Abweichung voneinander auf eine schiefe Einbaulage des Dichtungssystems (10, 110) schließt.

**27.** Verfahren nach einem der vorhergehenden Ansprüche,
**dadurch gekennzeichnet, dass**
man das aktuelle Messergebnis mit einer Vergleichmessung an einem funktionstüchtigen Dichtungselement (12, 112) vergleicht und bei einer ein vorgegebenes Maß überschreitenden Abweichung oder bei Überschreitung bzw. Unterschreitung eines vorgegebenen Grenzwertes auf ein nicht funktionstüchtiges aktuelles Dichtungselement (12, 112) schließt.

**28.** Verfahren nach Anspruch 27,
**dadurch gekennzeichnet, dass**
man die Vergleichsmessung am Dichtungselement (12, 112) des Dichtungssystems (10, 110) vornimmt, vorzugsweise nach erfolgter Montage des Dichtungssystems, und dass man zur laufenden Überprüfung des Dichtungssystems dementsprechend Messungen vornimmt und mit der Vergleichsmessung vergleicht.

**29.** Verfahren nach den Ansprüche 27 oder 28,
**dadurch gekennzeichnet, dass**
man zur Ermittlung des vorgegebenen Maßes der zulässigen Abweichung bzw. des vorgegebenen Grenzwerts an einer Probe aus dem auch für das Dichtungssystem (10, 110) verwendeten dielektrischen Material wenigstens eine Belastungstestmessung, vorzugsweise mit zwischenzeitlichen Probenerwärmungsschritten, vornimmt.

**30.** Dichtungssystem (10, 110) zur Bestimmung eines Zustandsparameters desselben mit wenigstens einem dielektrischen Element (24, 124) in Form eines Kondensatorelements aus einer Mittelschicht (26, 126) aus dielektrischem Material, die beidseits mit je einer Elektrodenschicht (28, 28', 128) versehen ist und mit einer mit dem wenigstens einen dielektrischen Element (24, 124) verbundenen Mess- und Auswerteinheit (30), wobei die Mittelschicht (126) von einem porösen Material gebildet ist und
das dielektrische Element (24, 124) in ein Dichtungselement des Dichtungssystems eingebettet ist.

**31.** Dichtungssystem (10, 110) nach Anspruch 30,
**dadurch gekennzeichnet, dass**
das dielektrische Element (24, 124) unter Vakuum eingeschweißt ist.

**32.** Dichtungssystem nach Anspruch 30 oder 31,
**dadurch gekennzeichnet, dass**
das dielektrische Element (24, 124) mit dem Dichtungselement verschweißt ist.

**33.** Dichtungssystem nach einem der Ansprüche 30 bis 32,
**dadurch gekennzeichnet, dass**
es mit wenigstens einem Temperatursensor versehen ist.

**34.** Dichtungssystem nach Anspruch 33,
**dadurch gekennzeichnet, dass**
der wenigstens eine Temperatursensor von einem Platin-Filmwiderstand gebildet ist.

**35.** Dichtungssystem nach Anspruch 33 oder 34,
**dadurch gekennzeichnet, dass**
der Temperatursensor in das dielektrische Element integriert ist.

**36.** Dichtungssystem (10, 110) nach einem der Ansprüche 30 bis 35,
**dadurch gekennzeichnet, dass**
die Mess- und Auswerteeinheit (30) ausgebildet ist zur Ermittlung eines charakteristischen Frequenzverlaufs des Realteils und/oder des Imaginärteils der dielektrischen Funktion durch Messung des Realteils bzw. des Imaginärteils der komplexen dielektrischen Funktion des dielektrischen Elements bei unterschiedlichen Frequenzen.

**Claims**

**1.** Method for establishing at least one state parameter of a sealing system (10, 100) with at least one sealing element (12, 112) and at least one dielectric element (24, 124), which contains dielectric material, wherein the real part and/or the imaginary part of the complex dielectric function of the dielectric elements is measured, wherein the dielectric material (26, 126) of the dielectric element (24, 124) is formed by a porous material and the dielectric element (24, 124) is part of the sealing element (12, 112) of the sealing system (10, 110).

2. Method according to claim 1, **characterised in that** the porous material has high capillarity, preferably with an inner surface > 10 m$^2$/g, preferably > 100 m$^2$/g relative to the fluid, against which the sealing system is to provide a seal.

3. Method according to one of the preceding claims, **characterised in that** the dielectric element (24, 124) is formed by a capacitor arrangement made of 2 electrode layers (28, 28', 128) on both sides of a middle layer (26, 126) made from the dielectric material.

4. Method according to claim 3, **characterised in that** the dielectric element (24, 124) has a thickness of less than 1 mm, preferably less than 100 $\mu$m, most preferably about 10 $\mu$m.

5. Method according to claim 4, **characterised in that** the dielectric element (24, 124) has a capacity of 1 pF to 1000 pF, preferably about 100 pF.

6. Method according to one of the preceding claims, **characterised in that** a dielectric element is used, the inner surfaces of which are prepared for the greatest possible attachment of the sealing fluid or of components thereof.

7. Method according to one of the preceding claims, **characterised in that** a dielectric element is used, the inner surfaces of which are prepared for as little attachment as possible of a surrounding fluid or of components thereof.

8. Method according to claim 6 and/or claim 7, **characterised in that** the inner surfaces are hydrophobic or hydrophilic.

9. Method according to one of the preceding claims, **characterised in that** the respective temperature of the at least one sealing element is measured and taken into account on evaluating the measured complex dielectric function.

10. Method according to claim 9, **characterised in that** in the possible operating temperature range of the sealing system at at least two different temperatures comparative measurements are carried out, and **in that** the current measurement result at the current temperature is compared with the comparative measurement at the next temperature.

11. Method according to claim 9, **characterised in that** a temperature-corrected measurement result is derived from the current measurement result and the current temperature.

12. Method according to claim 9, **characterised in that** a temperature-corrected form parameter is derived from the form parameter and the current temperature.

13. Method according to one of the preceding claims, **characterised in that** the measurement is made at at least a frequency of > 10$^{-2}$ Hz.

14. Method according to claim 13, **characterised in that** the at least one frequency lies in the frequency range of 0.1 Hz to 10 MHz, preferably 100 Hz to 100 kHz.

15. Method according to one of the preceding claims, **characterised in that** a characteristic frequency curve of the real part and/or the imaginary part of the dielectric function is determined by measurements of the real part or the imaginary part of the complex dielectric function of the dielectric part at different frequencies, wherein the measurements are carried out at at least two different frequencies, preferably at least 10, most preferably at least 30 different frequencies.

16. Method according to claim 15, **characterised in that** at least one form parameter of the frequency curve is determined.

17. Method according to claim 16, **characterised in that** the form parameter is an absolute value or a rise or a curvature of the frequency curve at a predetermined frequency.

**18.** Method according to claim 16, **characterised in that** the form parameter is the frequency position or the amplitude of a characteristic section of the frequency curve.

**19.** Method according to claim 18, **characterised in that** the characteristic section is a step or a peak.

**20.** Method according to one of claims 16 to 19, **characterised in that** at least one of the form parameters is the rise of the real part at low frequencies, preferably $\leq 100$ Hz.

**21.** Method according to one of claims 16 to 20, **characterised in that** at least one of the form parameters is the absolute value of the real part or the imaginary part at high frequencies, preferably $\geq 1$ kHz.

**22.** Method according to one of claims 16 to 21, **characterised in that** the at least one form parameter is the absolute value of the imaginary part at a frequency of between 10 Hz and 1 kHz, preferably about 100 Hz.

**23.** Method according to one of claims 16 to 22, **characterised in that** the at least one form parameter is the surface below a peak of the frequency curve of the imaginary part.

**24.** Method according to one of claims 16 to 23, **characterised in that** the at least one form parameter is the quotient of the absolute values of the imaginary part and the real part, preferably at a frequency of $\leq 1$ kHz.

**25.** Method according to one of the preceding claims, **characterised in that** at several points, preferably at 3 or 4 points, of the sealing element (12, 112) a dielectric element (24, 124) is provided and measures the real part and/or the imaginary part of the dielectric function respectively.

**26.** Method according to claim 25, **characterised in that** the measurement results obtained at several points are compared and if there is a deviation exceeding a predetermined amount this leads to the conclusion that the sealing system (10, 110) is installed incorrectly at an angle.

**27.** Method according to one of the preceding claims, **characterised in that** the current measurement result is compared with a comparative measurement on a functionally reliable sealing element (12, 112) and if there is a deviation exceeding a predetermined amount or exceeding or falling below a predetermined threshold it can be concluded that the current sealing element (12, 112) is not operationally reliable.

**28.** Method according to claim 27, **characterised in that** the comparative measurement is conducted on the sealing element (12, 112) of the sealing system (10, 110), preferably after the assembly of the sealing system, and **in that** for the continuous examination of the sealing system corresponding measurements are made and compared with the comparative measurement.

**29.** Method according to claims 27 or 28, **characterised in that** to determine the predetermined extent of the permissible deviation or the predetermined threshold on a sample of the dielectric material used for the sealing system (10, 110) at least one load test measurement is carried out, preferably with intermediate sample warming steps.

**30.** Sealing system (10, 110) for determining a state parameter thereof with at least one dielectric element (24, 124) in the form of capacitor element from a middle layer (26, 126) made of dielectric material, which is provided on both sides with an electrode layer (28, 28', 128) and with a measuring and evaluation unit (30) connected with at least one dielectric element (24, 124), wherein the middle layer (126) is made of a porous material and the dielectric element (24, 124) is embedded in a sealing element of the sealing system.

**31.** Sealing system (10, 110) according to claim 30, **characterised in that** the dielectric element (24, 124) is welded in under vacuum.

**32.** Sealing system according to claim 30 or 31, **characterised in that** the dielectric element (24, 124) is welded to the sealing element.

**33.** Sealing system according to one of claims 30 to 32, **characterised in that** it is provided with at least one temperature sensor.

**34.** Sealing system according to claim 33, **characterised in that** the at least one temperature sensor is formed by a printed board film resistor.

35. Sealing system according to claim 33 or 34, **characterised in that** the temperature sensor is integrated into the dielectric element.

36. Sealing system (10, 110) according to one of claims 30 to 35, **characterised in that** the measuring and evaluation unit (30) is designed for determining a characteristic frequency curve of the real part and/or the imaginary part of the dielectric function by measuring the real part or the imaginary part of the complex dielectric function of the dielectric element at different frequencies.

**Revendications**

1. Procédé de détermination d'au moins un paramètre d'état d'un système d'étanchéité (10, 100) comprenant au moins un élément d'étanchéité (12, 112) et au moins un élément diélectrique (24, 124) qui contient un matériau diélectrique, procédé dans lequel on mesure la partie réelle et/ou la partie imaginaire de la fonction diélectrique complexe de l'élément diélectrique, le matériau diélectrique (26, 126) de l'élément diélectrique (24, 124) étant constitué d'un matériau poreux et l'élément diélectrique (24, 124) faisant partie de l'élément d'étanchéité (12, 112) du système d'étanchéité (10, 110).

2. Procédé selon la revendication 1, **caractérisé en ce que** le matériau poreux présente une capillarité élevée, de préférence avec une aire de surface interne supérieure à 10 m$^2$/g, mieux supérieure à 100 m$^2$/g, vis-à-vis du fluide contre lequel le système d'étanchéité doit assurer l'étanchéité.

3. Procédé selon l'une des revendications précédentes, **caractérisé en ce que** l'élément diélectrique (24, 124) est formé par un agencement de condensateur constitué de 2 couches électrodes (28, 28', 128) de part et d'autre d'une couche centrale (26, 126) faite du matériau diélectrique.

4. Procédé selon la revendication 3, **caractérisé en ce que** l'élément diélectrique (24, 124) présente une épaisseur inférieure à 1 mm, de préférence inférieure à 100 $\mu$m, au mieux égale à 10 $\mu$m environ.

5. Procédé selon la revendication 4, **caractérisé en ce que** l'élément diélectrique (24, 124) présente une capacité allant de 1 pF à 1000 pF, au mieux égale à 100 pF environ.

6. Procédé selon l'une des revendications précédentes, **caractérisé en ce que** l'on utilise un élément diélectrique dont les aires de surface internes sont préparées de façon à permettre une accumulation aussi grande que possible du fluide d'étanchéité ou de constituants de celui-ci.

7. Procédé selon l'une des revendications précédentes, **caractérisé en ce que** l'on utilise un élément diélectrique dont les aires de surface internes sont préparées de façon à permettre une accumulation aussi faible que possible du fluide environnant ou de constituants de celui-ci.

8. Procédé selon la revendication 6 et/ou la revendication 7, **caractérisé en ce que** les aire de surface internes sont rendues hydrophobes ou hydrophiles.

9. Procédé selon l'une des revendications précédentes, **caractérisé en ce que** l'on mesure la température respective dudit au moins un élément d'étanchéité et on en tient compte dans l'évaluation de la fonction diélectrique complexe mesurée.

10. Procédé selon la revendication 9, **caractérisé en ce que** l'on effectue des mesures comparatives à au moins deux températures différentes dans la plage de température de service possible du système d'étanchéité et **en ce que** l'on compare le résultat de mesure actuel à la température actuelle avec la mesure comparative à la température immédiatement suivante.

11. Procédé selon la revendication 9, **caractérisé en ce que** l'on dérive un résultat de mesure corrigé en température à partir du résultat de mesure actuel et de la température actuelle.

12. Procédé selon la revendication 9, **caractérisé en ce que** l'on dérive un paramètre de forme corrigé en température à partir du paramètre de forme et de la température actuelle.

13. Procédé selon l'une des revendications précédentes, **caractérisé en ce que** l'on effectue la mesure à au moins une fréquence supérieure à $10^{-2}$ Hz.

14. Procédé selon la revendication 13, **caractérisé en ce que** ladite au moins une fréquence se situe dans la plage de fréquence allant de 0,1 Hz à 10 MHz, de préférence de 100 Hz à 100 kHz.

15. Procédé selon l'une des revendications précédentes, **caractérisé en ce que** l'on détermine une courbe de fréquence caractéristique de la partie réelle et/ou de la partie imaginaire de la fonction diélectrique par des mesures de la partie réelle ou de la partie imaginaire de la fonction diélectrique complexe de l'élément diélectrique à différentes fréquences, les mesures étant effectués à au moins deux, de préférence à au moins 10, mieux à au moins 30 fréquences différentes.

16. Procédé selon la revendication 15, **caractérisé en ce que** l'on détermine au moins un paramètre de forme de la courbe de fréquence.

17. Procédé selon la revendication 16, **caractérisé en ce que** le paramètre de forme est une valeur absolue ou une pente ou une courbure de la courbe de fréquence à une fréquence prédéfinie.

18. Procédé selon la revendication 16, **caractérisé en ce que** le paramètre de forme est la position fréquentielle ou l'amplitude d'un segment caractéristique de la courbe de fréquence.

19. Procédé selon la revendication 18, **caractérisé en ce que** le segment caractéristique est un palier ou un pic.

20. Procédé selon l'une des revendications 16 à 19, **caractérisé en ce que** l'un au moins des paramètres de forme est la pente de la partie réelle aux fréquences basses, de préférence ≤100 Hz.

21. Procédé selon l'une des revendications 16 à 20, **caractérisé en ce que** l'un au moins des paramètres de forme est la valeur absolue de la partie réelle ou de la partie imaginaire aux fréquences élevées, de préférence ≥1 kHz.

22. Procédé selon l'une des revendications 16 à 21, **caractérisé en ce que** ledit au moins un paramètre de forme est la valeur absolue de la partie imaginaire à une fréquence comprise entre 10 Hz et 1 kHz, de préférence égale à 100 Hz environ.

23. Procédé selon l'une des revendications 16 à 22, **caractérisé en ce que** ledit au moins un paramètre de forme est l'aire sous un pic de la courbe de fréquence de la partie imaginaire.

24. Procédé selon l'une des revendications 16 à 23, **caractérisé en ce que** ledit au moins un paramètre de forme est le quotient des valeurs absolues de la partie imaginaire et de la partie réelle, de préférence à une fréquence ≤1 kHz.

25. Procédé selon l'une des revendications précédentes, **caractérisé en ce que** l'on prévoit un élément diélectrique (24, 124) à plusieurs endroits, de préférence à 3 ou 4 endroits, de l'élément d'étanchéité (12, 112) et on mesure à chaque fois la partie réelle et/ou la partie imaginaire de la fonction diélectrique.

26. Procédé selon la revendication 25, **caractérisé en ce que** l'on compare les uns aux autres les résultats de mesure obtenus à plusieurs endroits et, en cas d'écart supérieur à une valeur prédéfinie, on conclut à une position de montage incorrect du système d'étanchéité (10, 110).

27. Procédé selon l'une des revendications précédentes, **caractérisé en ce que** l'on compare le résultat de mesure actuel avec une mesure comparative effectuée sur un élément d'étanchéité (12, 112) fonctionnel et, en cas d'écart supérieur à une valeur prédéfinie ou en cas de dépassement par le haut ou par le bas d'une valeur seuil prédéfinie, on conclut que l'élément d'étanchéité (12, 112) actuel est non fonctionnel.

28. Procédé selon la revendication 27, **caractérisé en ce que** l'on effectue la mesure comparative sur l'élément d'étanchéité (12, 112) du système d'étanchéité (10, 110), de préférence après avoir réalisé le montage du système d'étanchéité, et **en ce que**, pour surveiller en permanence le système d'étanchéité, on effectue des mesures correspondantes et on les compare avec la mesure comparative.

**29.** Procédé selon la revendication 27 ou la revendication 28, **caractérisé en ce que**, pour déterminer la valeur prédéfinie, l'écart admissible ou la valeur seuil prédéfinie, on effectue au moins une mesure d'essai de sollicitation sur un échantillon du matériau diélectrique utilisé pour le système d'étanchéité (10, 110), de préférence en intercalant des étapes d'échauffement de l'échantillon.

**30.** Système d'étanchéité (10, 110) servant à déterminer un de ses paramètres d'état, avec au moins un élément diélectrique (24, 124) sous la forme d'un élément de condensateur fait d'une couche centrale (26, 126) en matériau diélectrique qui est dotée d'une couche électrode (28, 28', 128) sur chacune de ses deux faces et avec un module de mesure et de traitement (30) relié audit au moins un élément diélectrique (24, 124), la couche centrale (126) étant constituée d'un matériau poreux et l'élément diélectrique (24, 124) noyé dans un élément d'étanchéité du système d'étanchéité.

**31.** Système d'étanchéité (10, 110) selon la revendication 30, **caractérisé en ce que** l'élément diélectrique (24, 124) est intégré par soudage sous vide.

**32.** Système d'étanchéité selon la revendication 30 ou la revendication 31, **caractérisé en ce que** l'élément diélectrique (24, 124) est soudé à l'élément d'étanchéité.

**33.** Système d'étanchéité selon l'une des revendications 30 à 32, **caractérisé en ce qu'**il est doté d'au moins un capteur de température.

**34.** Système d'étanchéité selon la revendication 33, **caractérisé en ce que** ledit au moins un capteur de température est constitué d'une résistance à film de platine.

**35.** Système d'étanchéité selon la revendication 33 ou la revendication 34, **caractérisé en ce que** le capteur de température est intégré dans l'élément diélectrique.

**36.** Système d'étanchéité (10, 110) selon l'une des revendications 30 à 35, **caractérisé en ce que** le module de mesure et de traitement (30) est conçu pour déterminer une courbe de fréquence caractéristique de la partie réelle et/ou de la partie imaginaire de la fonction diélectrique par des mesures de la partie réelle ou de la partie imaginaire de la fonction diélectrique complexe de l'élément diélectrique à différentes fréquences.

Fig. 1

Fig. 2

Fig. 3 A

Fig. 3B

EP 1 597 554 B1

Fig. 4 A

Fig. 4B

EP 1 597 554 B1

Fig. 5

Fig. 6A

EP 1 597 554 B1

Fig. 6 B

EP 1 597 554 B1

Fig. 7A

EP 1 597 554 B1

Fig. 7B

EP 1 597 554 B1

Fig. 8A

EP 1 597 554 B1

Fig. 8B

Flächendruck [MPa]

EP 1 597 554 B1

Fig. 9

Fig. 10

Fig. 11 A

Fig. 11 B

Fig. 12 A

Fig. 12 B

Fig. 13 A

Fig. 13 B

Fig. 14 A

Fig. 14 B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3006656 A1
- DE 4101871 A1
- DE 3441924 A1
- DE 4139602 A1
- EP 0841516 A1
- US 5072190 A
- US 5793150 A
- EP 1460406 A1
- US 5177996 A
- EP 0633460 A2

**In der Beschreibung aufgeführte Nicht-Patentliteratur**

- Broadband dielectric measurement techniques. Broadband dielectric spectroscopy. Springer Verlag, 2002